## Europäisches Patentamt

## European Patent Office

## Office européen des brevets

(19)

(11) Veröffentlichungsnummer: **0 042 981**
**B1**

(12) # EUROPÄISCHE PATENTSCHRIFT

(45) Veröffentlichungstag der Patentschrift:
**14.03.84**

(51) Int. Cl.³: **H 04 N 1/40**

(21) Anmeldenummer: **81104185.4**

(22) Anmeldetag: **01.06.81**

(54) **Verfahren zur Codierung von elektrischen Signalen, die bei der Abtastung eines grafischen Musters mit aus Text und Bildern gemischtem Inhalt gewonnen werden.**

(30) Priorität: **27.06.80 DE 3024322**

(43) Veröffentlichungstag der Anmeldung:
**06.01.82 Patentblatt 82/1**

(45) Bekanntmachung des Hinweises auf die Patenterteilung:
**14.03.84 Patentblatt 84/11**

(84) Benannte Vertragsstaaten:
**CH FR GB IT LI NL SE**

(56) Entgegenhaltungen:
**EP - A - 0 006 131**
**DE - A - 2 516 332**

(73) Patentinhaber: **SIEMENS AKTIENGESELLSCHAFT, Berlin und München Wittelsbacherplatz 2, D-8000 München 2 (DE)**

(72) Erfinder: **Postl, Wolfgang, Dipl.-Ing., Edelweisstrasse 11, D-8131 Berg (DE)**

### Verfahren zur Codierung von elektrischen Signalen, die bei der Abtastung eines grafischen Musters mit aus Text und Bildern gemischtem Inhalt gewonnen werden

Die vorliegende Erfindung betrifft ein Verfahren zur Codierung von elektrischen Signalen, die bei der Abtastung eines grafischen Musters mit aus Text und Bildern gemischtem Inhalt gewonnen werden, wobei das graphische Muster in Teilbereiche unterteilt ist.

Aus der deutschen Offenlegungsschrift DE-A1-2 516 332 ist ein Verfahren zur Codierung von elektrischen Signalen, die bei der Abtastung eines grafischen Musters mit aus Text und Bildern gemischtem Inhalt gewonnen werden, bekannt, das dadurch gekennzeichnet ist, daß das grafische Muster in Teilbereiche unterteilt wird und daß zur Codierung der bei der Abtastung von im wesentlichen Bildanteile enthaltenden Teilbereiche gewonnenen elektrischen Signale ein Bildcode verwendet wird, während zur Codierung der übrigen Teilbereiche ein Textcode verwendet wird.

Bildcode und Textcode können aus einer Vielzahl bekannter Codes nach verschiedenen Kriterien derart ausgewählt werden, daß eine möglichst günstige Codierung der Bild- und Textbereiche gewährleistet ist.

Typische Kriterien zur Auswahl eines Codes sind beispielsweise: Kleiner Bedarf an Speicherplatz oder Übertragungszeit für das durch die Codierung erzeugte Codesignal; geringe Störanfälligkeit des Codesignals; optimale Qualität — nach ästhetischen oder anderen Gesichtspunkten — des aus dem Codesignal durch Decodierung wieder hergestellten grafischen Musters; Kompatibilität mit genormten Codes.

Typische Textcodes werden in dem Aufsatz »Facsimile Run Length Coding Using Run Length Predicition« von P. A. Stern, W. E. Heinlein in den Siemens Forschungs- und Entwicklungsberichten Band 3 (1974), Nr. 3, typische Bildcodes in dem Aufsatz »Adaptive Delta Modulation Systems for Video Encoding« von T.-L. R. Lei, N. Scheinberg, D. L. Schilling in IEEE Trans. on Communications, Vol. COM-25 (1977), Seiten 1302—1314 beschrieben. Die in dem erstgenannten Aufsatz angegebenen Textcodes können — wie dort an einem Beispiel gezeigt wird — auch zur Codierung von Zeichnungen verwendet werden. Sie eignen sich, wie an einem weiteren Beispiel gezeigt wird auch zur Codierung von Schwarzweiß-Bildern, die — wie in grafischen Mustern üblich — im Rasterverfahren gedruckt sind, wobei verschiedene Graustufen durch größere oder kleinere schwarze oder weiße Punkte auf hellem bzw. dunklem Hintergrund dargestellt werden. Die Codierung von Halbtonbildern mittels der in dem Aufsatz von Stern und Heinlein genannten Textcodes ist allerdings nur unter der Voraussetzung vorteilhaft, daß die Auflösung oder Schärfe der Abtastung zur Wiedergabe der Position und Größe der Rasterpunkte ausreicht. Eine entsprechende Aussage gilt auch für die Codierung von Farbbildern, die aus mehreren übereinandergedruckten Farbauszügen bestehen. Auf solche Bilder kann das obengenannte wie auch das erfindungsgemäße Verfahren in zwei alternativen naheliegenden Abwandlungen Anwendung finden:

a) Es wird mit Hilfe von Farbfiltern jeder Farbauszug einzeln erfaßt oder aus einem Rot/Grün/Blau (RGB)-Abtastsignal, wie es eine Farbfernsehkamera liefert, mit Hilfe eines Farbrechners, der nach dem Muster bekannter Farbfernsehcoder eine für jeden Farbauszug charakteristische Linearkonbination aus den drei Komponenten des RGB-Signals bildet, berechnet; jeder Farbauszug wird nunmehr nach dem für Schwarz-Weiß-Bilder geeigneten Verfahren codiert werden, wobei »weiß« wie »weiß« und »farbig« wie »schwarz« interpretiert wird.

b) Es wird lediglich das Chrominanzsignal codiert, wobei von Weiß verschiedene Stellen des Musters ungeachtet ihrer Farbe, als »schwarz« interpretiert werden.

— Dieses Verfahren kann selbstverständlich nicht die Farbwerte des Originals im Codesignal wiedergegeben.

Es kann jedoch auch dann, wenn die Abtastschärfe zur Auflösung des Drucktasters ausreicht, vorteilhaft sein, einen der in dem genannten Aufsatz von Lei, Scheinberg und Schilling beschriebenen Codes zur Codierung von Halbtonbildern zu verwenden, allerdings vorteilhafterweise unter Anwendung einer in der DE-A1-2 516 332 angegebenen Weiterbildung des dort beschriebenen Verfahrens, die dadurch gekennzeichnet ist, daß das mit dem Bildcode zu codierende Abtastsignal durch eine Abtastung derart verminderter Schärfe gewonnen wird, daß die Rasterstruktur des grafischen Musters unterdrückt wird, wobei das Abtastsignal verminderter Schärfe ggf. aus dem Abtastsignal unverminderter Schärfe mit Hilfe eines Rechners gewonnen wird, der eine Abtastung verminderter Schärfe nachbildet.

Eine andere Weiterbildung des bekannten Verfahrens ist dadurch gekennzeichnet, daß ein bei der Abtastung eines Teilbereichs mit unbekanntem Inhalt gewonnenes Abtastsignal mit einem Textcode und das gleiche oder ein zweites Abtastsignal mit einem Bildcode codiert wird, daß die beiden hierbei gewonnenen Codesignal zwischengespeichert werden und daß das mit dem Textcode codierte Codesignal verwendet wird, falls seine Länge nicht größer ist als das Produkt aus der Fläche des Teilbereiches und einem vorgegebenen Proportionalitätsfaktor, während andernfalls das mit dem Bildcode erzeugte Codesignal verwendet wird.

Die Anwendung dieser Weiterbildung ist jedoch nur unter der Voraussetzung vorteilhaft, daß die Abtastschärfe zur Auflösung des Rasters, in dem der Bildinhalt des grafischen Musters gedruckt ist, ausreicht, in anderen Worten: zur Wiedergabe der Lage und Größe der Rasterpunkte ausreicht.

Ist diese Voraussetzung erfüllt, dann wird einerseits ein Bildbereich mit großer Wahrscheinlichkeit mit einem Bildcode codiert werden, andererseits wird auch dann, wenn ein solcher Bereich durch ein Textcode codiert wird, keine Beeinträchtigung des Bildinhalts durch die Codierung erfolgen. Es werden lediglich die Teilbereiche, bei deren Codierung eine Fehlentscheidung erfolgt ist, mit einem längeren Codesignal als erforderlich codiert werden.

Ist diese Voraussetzung hingegen nicht erfüllt, dann wird einerseits bei Codierung eines Bildbereichs mit einem Textcode häufig ein derart kurzes Codesignal entstehen, daß eine Codierung mit einem Textcode erfolgt; andererseits wird die Codierung eines Bildbereichs mit einem Textcode eine erhebliche Verfälschung des Bildinhalts bewirken, die sich in dem nach Decodierung wieder hergestellten Bild durch das Auftreten größerer schwarzer oder weißer Flecken bemerkbar macht. Wenn hierbei von der »Codierung eines (Teil)bereichs« die Rede ist, so wird darunter die Codierung des elektrischen Signals verstanden, das bei der Codierung des Teilbereichs gewonnen wurde. Wenn ferner vom »Abtastsignal eines (Teil)bereichs« die Rede ist, so wird darunter das Abtastsignal verstanden, das bei der Abtastung des Teilbereichs gewonnen wurde.

Der vorliegenden Erfindung liegt die Aufgabe zugrunde, ein gegenüber den bekannten Verfahren verbessertes Verfahren zur Auswahl eines Code für die Codierung von Teilbereichen anzugeben, das auch für solche Muster und/oder Abtastvorlagen geeignet ist, bei denen das bekannte Verfahren versagt. Es ist außerdem Aufgabe der vorliegenden Erfindung, eine Verfeinerung der Codierung dahingehend zu schaffen, daß eine Auswahl nicht nur zwischen zwei Codes, nämlich Bild- und Textcodes, sondern vielmehr auch zwischen mehreren Codes für Bild- und/oder Text zu ermöglichen.

Die genannte Aufgabe wird durch ein Verfahren zur Codierung von elektrischen Signalen, die bei der Abtastung eines grafischen Musters mit aus Text und Bildern gemischtem Inhalt gewonnen werden, gelöst, das dadurch gekennzeichnet ist, daß in einer Analyse erster Art (Begrenzungsanalyse) mindestens ein Teilbereich innerhalb des grafischen Musters ermittelt wird, daß das von der Abtastung des Teilbereiches herrührende Abtastsignal einer folgenden Analyse oder mehreren folgenden Analysen zweiter Art (Bereichsanalyse) unterzogen wird, daß die Ergebnisse der Bereichsanalysen zur Gewinnung jeweils einer Codeaussage und einer Sicherheitsaussage ausgewertet werden und daß aufgrund einer Bewertung sämtlicher Code- und Sicherheitsaussagen einer von mindestens zwei vorgegebenen Codes zur Codierung des Teilbereichs ausgewählt wird.

Die vorliegende Erfindung bietet den Vorteil, daß ein Verfahren zur Codierung von elektrischen Signalen, die bei der Abtastung eines grafischen Musters mit aus Text und Bildern gemischtem Inhalt gewonnen werden, zur Verfügung gestellt wird, das auch für solche Muster und/oder Abtastvorlagen geeignet ist, bei denen das bekannte Verfahren versagt.

Weiterbildungen der Erfindung sind im Anschluß an die folgende Beschreibung erläutert.

Im folgenden wird die Erfindung anhand mehrerer, Ausführungsbeispiele für die Erfindung betreffender Figuren im einzelnen erläutert.

Fig. 1 zeigt als Beispiel die Einteilung eines grafischen Musters M in Teilbereiche T1 bis T11, die mit Ausnahme von T4 zum Teil durch Weißblöcke W1 bis W16 und zum Teil durch eine Spaltengrenze S begrenzt sind.

Fig. 2 und 3 zeigen typische Anordnungen von Abtastpunkten in jeweils dem gleichen grafischen Muster.

Fig. 4 zeigt schematisch einen Modus für eine zweidimensionale Quantisierung.

Fig. 5 zeigt Abtastsignale s1(t) und s2(t) der beiden ersten Zeilen eines Teilbereichs.

Fig. 6 zeigt eine Tabelle mit insgesamt neun zweidimensionalen Quantisierungsintervallen.

Fig. 7 zeigt schematisch die Struktur eines Ausführungsbeispiels für eine Schaltungsanordnung bzw. ein Ablaufdiagramm zur Durchführung des erfindungsgemäßen Verfahrens.

Fig. 8 stellt ein grafisches Muster mit einem rechteckigen Teilbereich T dar.

Fig. 9 stellt schematisch das Energiespektrum eines Textbereiches dar.

Fig. 10 stellt schematisch das Energiespektrum eines Bildbereiches dar.

Fig. 11 zeigt schematisch einen Druckraster, bei dem die Stellen schwarzer Rasterpunkte durch Punkte, die Stellen weißer Rasterpunkte durch Kreise gekennzeichnet sind.

Fig. 12 zeigt eine Tabelle für eine Quantisierung in $3 \times 5 = 15$ zwei dimensionalen Intervallen.

Fig. 13 zeigt eine schematische Darstellung einer Einrichtung zur statischen Auswertung der Abtastwerte.

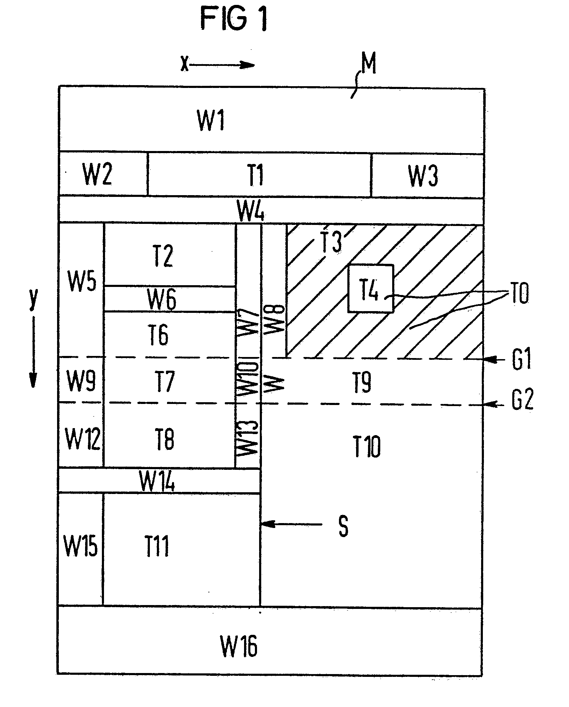

Wie bereits erläutert, zeigt Fig. 1 als Beispiel die Einteilung eines grafischen Musters M in Teilbereiche T1 bis T11, die mit Ausnahme von T4 zum Teil durch Weißblöcke W1 bis W16 und zum Teil durch eine Spaltengrenze S begrenzt sind. Es wird angenommen, daß die Teilbereiche T1 bis T3 und T5 bis T11 entsprechend einem in der DE-A1-2 516 323 angegebenen Verfahren aufgrund dieser Begrenzungen ermittelt werden können. Es wird ferner angenommen, daß die Grenzen des Teilbereiches T4 vorbekannt und manuell zum Zweck der Codierung eingestellt worden sind. Die in Fig. 1 eingezeichneten Grenzen G1 und G2 ergeben sich bei der Verwendung einer unten beschriebenen Einrichtung zur Realisierung des erfindungsgemäßen Verfahrens.

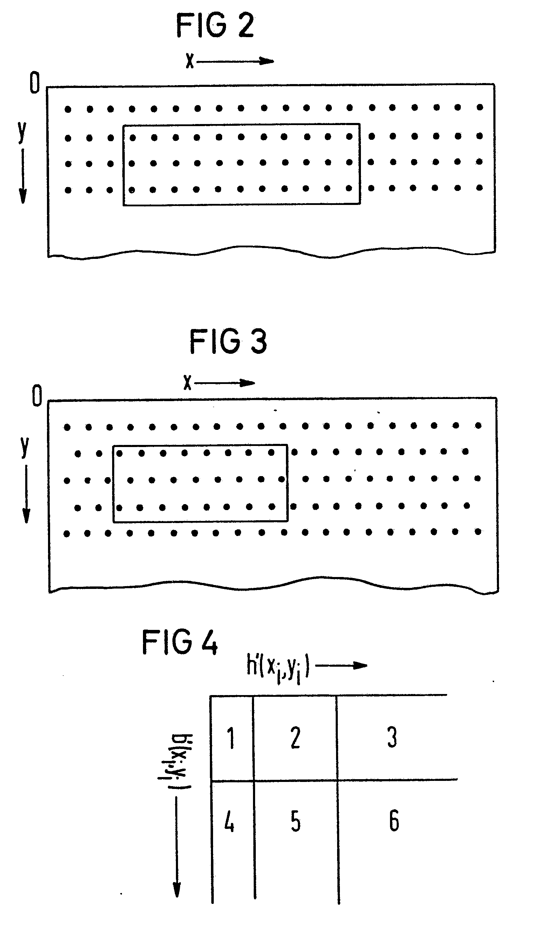

Fig. 2 und Fig. 3 zeigen, wie ebenfalls bereits erläutert, typische Anordnungen von Abtastpunkten in

**0 042 981**

jeweils dem gleichen grafischen Muster. Jedem Punkt des grafischen Musters ist hierbei ein Koordinatenpaar (x, y) zugeordnet, dessen Ursprung in der linken oberen Ecke des Musters gewählt wurde. Die Orientierung der Koordinatenachsen x und y wurde wie eingezeichnet gewählt. In den Fig. 2 und 3 sind jeweils eine Auswahl von Abtastpunkten in zwei Varianten einer spalten- und/oder zeilenweisen Anordnung und ferner die Grenzen eines rechteckigen Teilbereichs eingezeichnet. Diese Grenzen sind so zu interpretieren, daß alle innerhalb der Grenzen liegenden Abtastpunkte zum Teilbereich gehören.

Das grafische Muster wird mit Hilfe einer geeigneten Vorrichtung, z. B. mit einer Videokamera oder einem Faksimileabtaster, beispielsweise mit der in Computer Design, Vol. 18, März 1979, S. 225 unter dem Namen »C-1000« beschriebenen Videokamera oder dem in Auerbach, Guide to Facsimile Equipment, S. 50, published 1975 by Auerbach-Publishers Inc., 121 N. Bond Street, Philadelphia PA 19 107 unter dem Namen »Model 500« (Transmitter) beschriebenen Faksimileabtaster, abgetastet, an deren Ausgang das bei der Abtastung gewonnene elektrische Signal, im folgenden als Abtastsignal bezeichnet, in digitaler oder analoger Form bereit steht. Unter »digital« wird hierbei verstanden, daß das Abtastsignal in Form einer Folge digitaler Codeworte bereitsteht, die im allgemeinen die lokale Helligkeit des Musters für jeden Punkt eines regelmäßigen Punktrasters (Abtastpunkt) wie in Fig. 2 und 3 gekennzeichnet, angegeben. Der Code, in dem die Abtasteinrichtung die Helligkeit der Abtastpunkte angibt, wird im folgenden als »Abtastcode« bezeichnet. Im folgenden wird davon ausgegangen, daß der Abtastcode unkomprimiert ist, d. h. jeweils ein Codewort mit je n Bit Länge gibt die Helligkeit eines Abtastpunktes mit einer Genauigkeit von $2^n$ Helligkeitsstufen wieder. »n« ist eine natürliche Zahl. Als komprimierter Abtastcode wird ein Code bezeichnet, aus dem durch Decodierung mit Hilfe eines bekannten Verfahrens beispielsweise einem bei Stern, Heinlein: »Facsimile Run Length Coding Using Run length Predicition«, Siemens F. u. E. Berichte, Bd. 3 (1974), Nr. 3 oder bei Lei, Scheinberg, Schilling: »Adaptive Delta Modulation Systems for Video Encoding«, IEEE Trans. on Communications, Vol. COM-25 (1977), S. 1302—1314 beschriebenen Verfahrens ein unkomprimierter Abtastcode gewonnen werden kann. Das Abtastsignal wird nun — ggf. nach Umwandlung der analogen in eine digitale Form — beispielsweise mit Hilfe eines an sich bekannten Analog/Digital-Umsetzers, einer Analyse erster Art zugeführt.

In der Analyse erster Art wird mindestens ein Teilbereich innerhalb des grafischen Musters ermittelt, d. h. die Grenzen des Teilbereichs — beispielsweise durch die Koordinaten zweier gegenüberliegender Ecken des Teilbereichs dargestellt — werden in digital codierter Form bereitgestellt. Die Normierung der Koordinaten eines Punktes innerhalb des Musters ist an sich für die Erfindung unerheblich. Es empfiehlt sich jedoch, die Orientierung der beiden Koordinaten x und y, wie in F i g. 1 durch Pfeile angedeutet, vorzunehmen, wobei der Koordinatenursprung mit der linken oberen Ecke des Musters zusammenfällt. Falls die Abtastung des Musters zeilenweise und innerhalb einer Zeile punktweise erfolgt ist, empfiehlt es sich, als Einheit der x-Koordinate die Distanz zweier benachbarter Abtastpunkte und als Einheit der y-Koordinate die Distanz zweier benachbarter Zeilen zu verwenden.

Entsprechend einem in der DE-A1-2 516 332 angegebenen Verfahren ist es vorteilhaft, Weißblöcke und/oder Druckspaltengrenzen als Grenzen von Teilbereichen zu verwenden.

Bekanntlich ist nach dem üblichen Sprachgebrauch ein die Grenze eines Bereichs bestimmendes Element, beispielsweise ein Gartenzaun, im allgemeinen als Bestandteil einer der Bereiche zu betrachten, die es begrenzt. In der DE-OS 2 516 332 ist jedoch nichts darüber ausgesagt, als Bestandteil welches der Teilbereiche, die ein Weißblock begrenzt, der Weißblock betrachtet wird, bzw. ob der Weißblock mit einem Bild- oder einem Textcode codiert wird, falls der Weißblock als Grenze zwischen einem Bild- und einem Textbereich ermittelt wird. Das Fehlen einer solchen Aussage in der DE-A1-2 516 332 ist darin begründet, daß die Entscheidung für die eine oder die andere Maßnahme unter den eingangs beschriebenen Voraussetzungen für die Anwendbarkeit des in der DE-A1-2 516 332 beschriebenen Verfahrens unerheblich ist. Dies gilt im eingeschränkten Maße auch für die vorliegende Erfindung.

Es ist jedoch auch zweckmäßig, einen begrenzenden Weißblock oder Teile desselben als Teilbereich zu betrachten und mit einem ausgewählten Code zu codieren. Hierfür kommt vorzugsweise ein Code in Betracht, der ansonsten für die Codierung von Textbereichen vorgesehen ist.

Ein anderes vorteilhaftes Verfahren zur Codierung eines Weißblockbereiches besteht darin, daß ein Abtastpunkt eines Weißblockes jeweils zu demjenigen der von ihm begrenzten Teilbereiche gerechnet wird, von dem er die geringste Entfernung hat. Hierzu ist zu bemerken, daß sich an Grenzen von Druckspalten häufig auch Weißblöcke befinden, wie in Fig. 1 in der oberen Hälfte angedeutet. Ein Unterschied zwischen der Verwendung von Druckspalten und von Weißblöcken besteht erstens darin, daß Druckspaltengrenzen nur als vertikale, Weißblöcke hingegen als vertikale und horizontale Grenzen von Teilbereichen verwendet werden können, und zweitens darin, daß Druckspaltengrenzen zumindest für eine bestimmte Musterart, beispielsweise eine Zeitung oder Zeitschrift im allgemeinen eine einheitliche Lage bezüglich des Musters haben und deshalb voreingestellt werden können, während Weißblöcke im allgemeinen durch eine Analyse des Abtastsignals (weiter oben Analyse erster Art genannt) ermittelt werden können.

Zur Erläuterung sind in F i g. 1 verschiedenartig begrenzte Teilbereiche dargestellt. Beispielsweise ist T2 allseitig, T6 dreiseitig und T7 zweiseitig von Weißblöcken begrenzt.

4

Es ist vorteilhaft, bei Anwendung des in der DE-A1-2 516 332 beschriebenen Verfahrens, wonach vorzugsweise Weißblöcke als Teilbereichsgrenzen verwendet werden, die Analyse erster Art, die zur Ermittlung von Teilbereichsgrenzen führt, ggf. mit der Entscheidung zwischen der Auswahl eines ersten Code (Textcode) zur Codierung des Teilbereichs (Entscheidung A) und der weiteren Analyse des Teilbereichs (Entscheidung B) zu verbinden.

In Weiterbildung der Erfindung erfolgt die Entscheidung A, wenn der Teilbereich rechteckig und an mindestens zwei gegenüberliegenden Seiten durch Weißblöcke und/oder Spaltengrenzen begrenzt ist und die Distanz gegenüberliegender Weißblöcke einen vorgegebenen Minimalwert unterschreitet. Dieses Verfahren beruht auf der Tatsache, daß Bilder in grafischen Mustern einer bestimmten Art eine bestimmte Minimalausdehnung weder in horizontaler noch in vertikaler Richtung unterschreiten. Es ist allerdings nicht ausgeschlossen, daß in Bildern selbst Weißblöcke auftreten. Es ist deshalb vorteilhaft, die Parameter dieser Entscheidung, das sind der erwähnte Minimalwert sowie die Anzahl der als Grenzen ermittelten Weißblöcke, einstellbar zu machen, so daß ein optimaler Kompromiß, ggf. abhängig von der zu codierenden Musterart, zwischen der Wirksamkeit und der Sicherheit des erfindungsgemäßen Verfahrens getroffen werden kann.

Im Falle der Entscheidung B erfolgt mindestens eine Analyse zweiter Art nach einem hierzu geeigneten Verfahren für jeden der in der Analyse erster Art ermittelten Teilbereiche. Sobald die Ergebnisse der Analyse(n) für einen bestimmten Teilbereich vorliegen, wird durch Auswertung dieser Ergebnisse die Entscheidung getroffen, welcher Code zur Codierung des Teilbereichs verwendet wird.

Sobald für sämtliche ermittelten Teilbereiche die Entscheidung über den zu verwendenden Code vorliegt, wird ggf. mit der Ermittlung weiterer Teilbereiche, wie oben beschrieben, fortgefahren. Dieser Vorgang wird solange wiederholt, bis das gesamte grafische Muster lückenlos in Teilbereiche unterteilt und für jeden Teilbereich ein Code ermittelt ist.

Es ist vorteilhaft, wenn bestimmte Verfahrenselemente des erfindungsgemäßen Verfahrens — sei es die Ermittlung von Teilbereichen, sei es die Ermittlung eines optimalen Code für einen bestimmten Teilbereich — durch die Entnahme der Daten, die als Ergebnis des Verfahrenselements anfallen würden, aus einem Datenspeicher oder durch manuelle Einstellung ersetzt werden, falls die jeweiligen Daten bekannt sind.

Es ist vorteilhaft, wenn der Datenspeicher für eine bestimmte Art grafischer Muster, beispielsweise für bestimmte Zeitschriften oder bestimmte Seiten einer Zeitschrift, mit Daten gefüllt wird, die für diese Musterart charakteristisch sind. Dies gilt sinngemäß für eine manuelle Einstellung. Dazu stellt die Bedienungsperson eine bestimmte Codierungsart, z. B. »nur Bildcode für diese und jene Seite«, manuell ein. Dies kann in bestimmten Fällen einen vorteilhaften Zeitgewinn ergeben.

Die Codierung der Teilbereiche mit dem jeweils ermittelten Code bzw. die Erzeugung eines Codesignals, sowie dessen Übertragung an einen Speicher oder zu einem Partner, kann nach Maßgabe der verfügbaren Pufferspeicher- und Rechnerkapazität zu jedem späteren Zeitpunkt, für die einzelnen Teilbereiche sequentiell oder für mehrere Teilbereiche gleichzeitig erfolgen. Es ist ggf. vorteilhaft, auch eine Codierung eines Teilbereichs mit mehreren verschiedenen Codes oder mit einem bevorzugten Code bereits vor der Ermittlung des Codes, der für diesen Teilbereich verwendet werden soll, zu erzeugen, die Codesignale zu speichern und jeweils nach Ermittlung des für den Teilbereich zu verwendenden Code ggf. das Codesignal nicht durch erneute Codierung, sondern durch Auswahl aus den gespeicherten Codesignalen zu erzeugen. Dieses Verfahren ermöglicht ebenfalls einen vorteilhaften Zeitgewinn.

F i g. 7 zeigt, wie bereits erläutert, schematisch die Struktur eines Ausführungsbeispiels für eine Schaltungsanordnung bzw. ein Ablaufdiagramm zur Durchführung des erfindungsgemäßen Verfahrens. Durch Abtastung des Musters M mit Hilfe einer Abtasteinrichtung A wird ein Abtastsignal in digitaler Form gewonnen und über einen Ausgang 3 der Abtasteinrichtung A in einem ersten Pufferspeicher P1 über dessen Eingang 4 in digitaler Form gespeichert. Die Speicherung erfolgt beispielsweise derart, daß einer Auswahl zeilen- und spaltenweise angeordneter Abtastpunkte des Musters M, wie in Fig. 2 und 3 dargestellt, je Abtastpunkt jeweils acht Bit des Speichers zugeordnet werden, die die Musterhelligkeit in diesem Punkt angeben. Es wird in diesem Beispiel angenommen, daß auf Grund der beschränkten Kapazität des ersten Pufferspeichers P1 vorest nur ein Teilausschnitt, beispielsweise ein Streifen S1 des Musters abgetastet und gespeichert wird. Die untere Grenze dieses Streifens ist in F i g. 1 mit G1 bezeichnet.

Eine erste Analyseeinrichtung A1 unterteilt den Streifen S1 in Teilbereiche, indem sie Abtastwerte aus dem ersten Pufferspeicher P1 über dessen Ausgang 7 entnimmt und einer Analyse unterzieht, deren Ergebnis die Grenzen von Teilbereichen bzw. die Grenzen von Weißblöcken sind, die ihrerseits Teilbereiche begrenzen. Gegebenenfalls wird der Streifen S1 als einziger Teilbereich ermittelt. Über einen Ausgang 23 übermittelt die erste Analyseeinrichtung A1 die Grenzen von Teilbereichen, für die bereits aufgrund ihrer Abmessungen und ihrer Berandung nach dem erfindungsgemäßen Verfahren eine Entscheidung zugunsten eines bestimmten zur Codierung des Teilbereichs zu verwendenden Code möglich ist, sowie ggf. die Identifikation dieses Code, an einen Coder CD.

Dieser Coder CD übernimmt aus dem ersten Pufferspeicher P1, falls erforderlich, die von diesen Teilbereichen gewonnenen Abtastwerte, codiert sie unter Verwendung des identifizierten oder eines vereinbarten Code und speichert das erzeugte Codesignal in einem zweiten Pufferspeicher P2, aus

**0 042 981**

dem die Ausgabe an einen weiteren Speicher oder einen Partner erfolgt. Aus Weißblöcken gewonnene Abtastwerte müssen nicht unbedingt aus dem ersten Pufferspeicher P1 übernommen werden, sondern können ggf. durch einen einheitlichen Weißwert ersetzt werden.

Die Grenzen derjenigen Teilbereiche, für die eine Entscheidung zugunsten eines bestimmten Code nach dem obigen Verfahren nicht möglich ist, werden von der ersten Analyseeinrichtung A1 über den Ausgang 10 an eine zweite Analyseeinrichtung A2 übermittelt, die aus einer Analyse der von diesen Teilbereichen herrührenden Abtastwerte, die über den Ausgang 6 des ersten Pufferspeichers P1 entnommen werden, für jeden Teilbereich Analyseergebnisse ableitet und über den Ausgang 14 an eine Entscheidungseinrichtung E übergibt.

Diese trifft die Entscheidung, welcher von mindestens zwei vorgegebenen Codes zur Codierung jeweils eines Teilbereiches verwendet wird, und übergibt die Identifikation dieses Code an den Coder CD, der die Codierung des Teilbereichs, wie oben beschrieben, ausführt.

Sobald die Codierung der in dem Streifen S1 des Musters S ermittelten Teilbereiche und die Übertragung der jeweiligen Codesignale in den zweiten Pufferspeicher P2 abgeschlossen ist, erfolgt die Abtastung des an den Streifen S1 anschließenden Musterstreifens S2 und die Übertragung der daraus gewonnenen Abtastwerte in den ersten Pufferspeicher P1. Hierbei können die von dem Streifen S1 herrührenden Abtastwerte überschrieben werden, falls die von der ersten Analyseeinrichtung A1 vorgenommene Unterteilung des Streifens S1 in Teilbereiche vollständig war. Die untere Grenze des Streifens S2 ist in Fig. 1 mit G2 bezeichnet.

Es ist vorteilhaft, daß Musterelemente des analysierten Ausschnitts bzw. Streifens unter bestimmten Bedingungen nicht einem Teilbereich, sondern einer sog. Restklasse zugeordnet werden. Dies wird besonders häufig für Musterelemente zutreffen, die sich am unteren Rand des Streifens befinden. In diesem Fall wird erfindungsgemäß wie folgt vorgegangen:

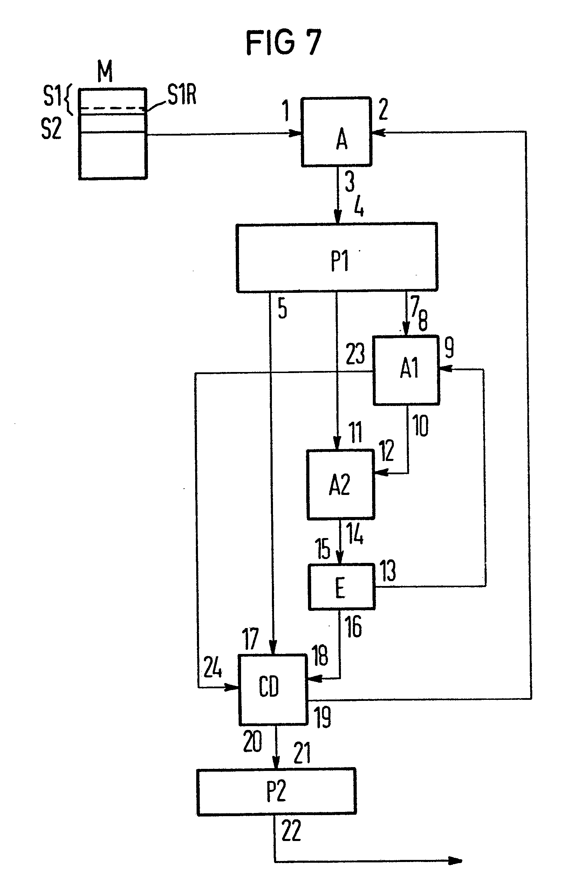

Die Abtastwerte des an den Streifen S2 anschließenden Teilstreifens von S1 (S1R in Fig. 7), in dem sich die der Restklasse zugeordneten Abtastwerte befinden, bleiben in dem ersten Pufferspeicher P1 erhalten, und es wird — bei beschränktem Speicherplatz — der Streifen S2 entsprechend schmäler gewählt, damit die Abtastwerte sowohl von S1R als auch von S2 in dem ersten Pufferspeicher P1 Platz finden. Dies ist durch die unterschiedliche Größe der Streifen S1 und S2 in Fig. 7 angedeutet.

Anschließend erfolgt die Analyse und Codierung der in dem ersten Pufferspeicher P1 gespeicherten Abtastwerte, soweit sie nicht einem bereits ermittelten und codiertem Teilbereich angehören.

Die sequentielle Beschreibung des erfindungsgemäßen Verfahrensablauf schließt nicht aus, daß im Hinblick auf eine Zeitersparnis mehrere der oben beschriebenen Verfahrensschritte simultan ablaufen. Beispielsweise kann während der Analyse zweiter Art eines Teilbereichs eine Analyse erster Art zur Ermittlung weiterer Teilbereiche erfolgen. Ebenso kann während der Analyse zweiter Art eines Teilbereiches die Codierung eines anderen Teilbereichs erfolgen, dessen optimale Codierung bereits ermittelt wurde. Schließlich kann es von Vorteil sein, die erfindungsgemäßen Verfahren zur Ausführung von Analysen erster und zweiter Art sowie zur Codierung von Teilbereichen simultan auf mehrere Ausschnitte des Musters, beispielsweise die in Fig. 7 mit S1 und S2 bezeichneten Streifen, anzuwenden, wobei allerdings das erwähnte Verfahren zur Restklassenbildung nicht zur Anwendung kommen kann.

In jedem Fall müssen bei einem simultanen Verfahrensablauf bestimmte Einrichtungen zur Realisierung des erfindungsgemäßen Verfahrens mehrfach vorhanden sein. Soweit es sich um Einrichtungen zur Steuerung des Verfahrensablaufs, zur Ausführung von Transformationen zur Codierung und zur Analyse handelt, kann hierfür ein Multi-Mikroprozessorsystem verwendet werden.

Stellvertretend für verschiedene Rückmeldeverbindungen, die nach Bedarf zwischen beliebigen Elementen der in Fig. 7 dargestellten Schaltungsanordnung geführt werden können, sind zwei Rückmeldeverbindungen, nämlich von Ausgang 13 der Entscheidungseinrichtung E zum Eingang 9 der ersten Analyseeinrichtung A1 sowie von Ausgang 19 des Coder CD zum Eingang 2 der Abtasteinrichtung A in Fig.7 dargestellt. Sie signalisieren beispielsweise die Vollendung einer auszuführenden Operation, z. B. der Analyse bzw. der Codierung eines Teilbereichs und damit die Bereitschaft zur Ausführung der nächsten Operation.

Die erstgenannte Rückmeldeverbindung hat im besonderen die Aufgabe, die durch die erste Analyseeinrichtung A1 erfolgte Ermittlung eines Teilbereichs zurückzuweisen, falls die in der zweiten Analyseeinrichtung A2 ausgeführte Analyse des Teilbereichs keine ausreichende Sicherheitsaussage über den für den Teilbereich zu verwendenden Code ergibt. In diesem Fall werden die in dem zurückgewiesenen Teilbereich enthaltenen Abtastpunkte der Restklasse des analysierten Streifens zugewiesen, und es wird, wie oben beschrieben, vorgegangen.

Im Gegensatz zu dem in der DE-A1-2 516 332 angegebenen Verfahren zur Unterscheidung von Text- und Bildbereichen werden weder für die erfindungsgemäße Analyse erster Art (Bereichsgrenzenanalyse) noch für bestimmte, unten angegebenen Verfahren zur Ausführung einer erfindungsgemäßen Analyse zweiter Art Abtastschärfen benötigt, die zur Auflösung der Druckrasterstruktur abgetasteter Bilder ausreichen. Es ist jedoch möglich, daß erfindungsgemäß Verfahren die variable Einstellung bestimmter Parameter abhängig von der Druckrasterfreiheit der abgetasteten Bilder erfordern, im besonderen eine besondere Einstellung für solche Bilder, bei denen die Abtastschärfe zur Auflösung der Druckrasterstruktur ausreicht.

6

Um eine Anpassung von Verfahrensparametern an die Druckrasterstruktur ganz oder weitgehend zu erübrigen, ist es bei Anwendung solcher Analyseverfahren, die auf eine Auflösung der Druckrasterstruktur nicht angewiesen sind, ggf. vorteilhaft, das Abtastsignal vor Ausführung der Begrenzungs- und/oder der Bereichsanalyse einer Vorfilterung zu unterziehen die einer Abtastung mit derart verringerter Schärfe entspricht, daß die Rasterstruktur unterdrückt wird. Hierbei genügt es ggf., wenn die Verminderung der Schärfe lediglich in einer bestimmten Richtung, beispielsweise bei zeilenweiser Abtastung in Zeilenrichtung, erfolgt.

Dieses Verfahren kann auch in der in Fig. 7 schematisch dargestellten erfindungsgemäßen Einrichtung zur Anwendung kommen. Einrichtungen zur Vorfilterung sind in Fig. 7 nicht eingezeichnet, ebensowenig wie Einrichtungen zur Verminderung der Abtastschärfe entsprechend der DE-A1-2 516 332. Sie werden in Fig. 7 vielmehr als Bestandteil der Analyseeinrichtungen A1 und/oder A2 bzw. des Coder CD betrachtet.

Eine Weiterbildung des erfindungsgemäßen Verfahrens ist dadurch gekennzeichnet, daß für eine Auswahl von Abtastpunkten des Teilbereichs aus dem Abtastsignal die Musterhelligkeit und/oder der Betrag des Gradienten der Musterhelligkeit in transformierter und quantisierter Form ermittelt wird, daß einer Auswahl der ein- bzw. zweidimensionalen Intervalle, die durch die Quantisierung entstehen, jeweils ein Analyse-Ergebniswert je Intervall zugeordnet wird und daß die Häufigkeit, mit der ein Intervall innerhalb des Teilbereichs auftritt, an den Analyse-Ergebniswert übertragen wird, der diesem Intervall zugeordnet ist.

Zum Verständnis der folgenden Erläuterungen wird vorerst erklärt, was unter »Musterhelligkeit« und »Gradient der Musterhelligkeit« zu verstehen ist.

Jeder Punkt innerhalb des grafischen Musters kann durch ein Koordinatenpaar (x, y) angegeben werden, wobei die Koordinatenachsen entsprechend Fig. 1 definiert sind.

Als Musterhelligkeit wird hier eine Funktion h (x, y) bezeichnet, die den Reflexionsfaktor oder die Lichtdurchlässigkeit für Licht einer vorgegebenen spektralen Zusammensetzung, gemessen im Punkt mit den Koordinaten (x, y), angibt.

Als Gradient der Musterhelligkeit wird ein Vektor mit den beiden Komponenten:

$$g_1(x, y) = \frac{\partial}{\partial x} h(x, y),$$

$$g_2(x, y) = \frac{\partial}{\partial y} h(x, y),$$

bezeichnet. Der Betrag des Gradienten der Musterhelligkeit wird im folgenden mit b (x, y) bezeichnet. b (x, y) ist durch folgende Formel gegeben:

$$b(x, y) = \sqrt{g_1^2(x, y) + g_2^2(x, y)}.$$

Aus dem Abtastsignal wird für eine ausgewählte Menge von Punkten $P_i$ des Teilbereichs, vorzugsweise im Teilbereich entsprechend Fig. 1 äquidistant angeordneten Punkten, eine Transformation $(h'(x_i, y_i); b'(x_i, y_i))$ des Wertepaars $(h(x_i, y_i); b(x_i, y_i))$ ermittelt und einer zweidimensionalen Quantisierung dadurch unterzogen, daß $h'(x_i, y_i)$ auf NA Quantisierungsstufen und $b'(x_i, y_i)$ auf NG Quantisierungsstufen quantisiert wird. Hierbei wird jedes Wertepaar $h'(x_i, y_i); b'(x_i, y_i)$ einem von insgesamt NA : NG zweidimensionalen Quantisierungsintervallen zugeordnet.

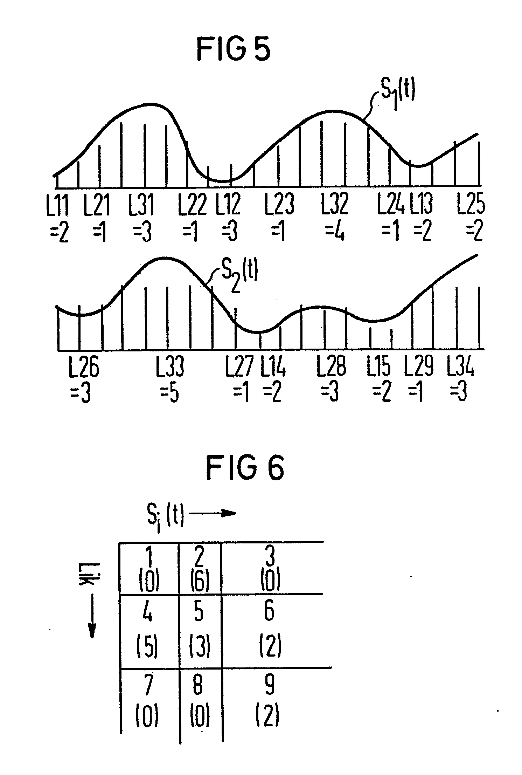

Zur Erläuterung sind in Fig. 4 die sechs zweidimensionalen Quantisierungsintervalle schematisch dargestellt, die sich ergeben, wenn für die Quantisierung der transformierten Musterhelligkeit NS = 3 mit den Quantisierungsschwellen 1 und 3 und wenn für die Quantisierung des transformierten Betrages des Gradienten der Musterhelligkeit NG = 2 mit der Quantisierungsschwelle 2 gewählt wurde. Die sechs Quantisierungsintervalle sind mit 1 bis 6 numeriert. Davon sind die Intervalle 3 bis 6 ein- oder zweiseitig offen.

Demnach würde beispielsweise das Wertepaar (2,5; 1,5) dem Quantisierungsintervall 2 und das Wertepaar (0,5; 3,1) dem Quantisierungsintervall 4 zugeordnet werden. In Fig. 4 wurde als Einheit 1 cm gewählt.

Eine Transformation des Wertepaares $(h(x_i, y_i); b(x_i, y_i))$ besteht beispielsweise aus

— einer Integration der Musterhelligkeit über eine Umgebung des Punktes $(x_i, y_i)$ (eine solche Integration erfolgt unvermeidlich durch die optische und elektronische Unschärfe der Abtasteinrichtung, sie kann jedoch zur Ausfilterung von Störungen innerhalb des Musters absichtlich verstärkt oder verändert werden);
— einer nichtlinearen Transformation der Bildhelligkeit, die durch die Abtasteinrichtung verursacht oder nachträglich auf das Abtastsignal angewandt wird;
— einer Vereinfachung der Berechnung des Gradientenbetrages, beispielsweise derart, daß der Differentialquotient der Helligkeit durch den Differenzenquotient der transformierten Helligkeit entsprechend der Formel

$$b'(x_i, y_i) = \sqrt{\left(\frac{h'(x_{i+1}, y_i) - h'(x_{i-1}, y_i)}{x_{i+1} - x_{i-1}}\right)^2 + \left(\frac{h'(x_i, y_{i+1}) - h'(x_{i-1}, y_i)}{y_{i+1} - y_{i-1}}\right)^2}$$

ersetzt wird;

— eine andere Vereinfachung der Berechnung des Gradientenbetrages bestünde darin, daß der Betrag des Gradienten durch die Summe der Beträge seiner Komponenten oder durch den Größtwert der Beträge seiner Komponenten oder eine andere Funktion der Beträge seiner Komponenten ersetzt wird, die ein Maß für die Steilheit der Helligkeitsübergänge an den ausgewählten Abtastpunkten des grafischen Musters darstellt.

Des weiteren ist erfindungsgemäß für n zweidimensionale Quantisierungsintervalle, die eine Auswahl aus den insgesamt NA : NG obengenannten Intervallen darstellen, je ein Zähler vorhanden, in den die Anzahl der ausgewählten Punkte $P_i$ des Teilbereichs, die dem Intervall dadurch zugeordnet sind, daß das Wertepaar $(h'(x_i, y_i); b'(x_i, y_i))$ in das jeweilige Intervall fällt, eingespeichert wird. Die Einspeicherung kann beispielsweise derart erfolgen, daß sämtliche Zähler auf Null gestellt werden, daß dann sequentiell für sämtliche Punkte $P_i$ die zugeordneten Intervalle ermittelt werden und dabei jeweils der dem Intervall zugeordnete Zähler um 1 inkrementiert wird, sofern für dieses Intervall ein Zähler vorgesehen ist. Nach erfolgter Einspeicherung stehen die Zählerstände als Analyse-Ergebnisse zur Verfügung.

Eine weitere vorteilhafte Form dieser Auswahl besteht darin, daß eine Transformation durch Integration der Musterhelligkeit — wie oben erwähnt — vorgenommen wird, die eine derartige Verminderung der Abtastschärfe simuliert, daß die Rasterstruktur von Rasterbildern unterdrückt wird. Die Wahl dieser Transformation kann häufig für eine bestimmte Musterart, z. B. eine bestimmte Zeitschrift, einheitlich getroffen werden.

Es ist vorteilhaft, bestimmten Intervallen dann keine Zähler zuzuordnen, wenn die Auswertung ihrer Häufigkeit durch die Entscheidungseinrichtung E für die Codeaussage nicht erforderlich ist. Ob dies zutrifft, kann ggf. experimentell geprüft werden. Sofern das Ergebnis dieser Prüfung für verschiedene Musterklassen unterschiedlich ausfällt, ist es vorteilhaft, die Zuordnung eines Zählers zu einem bestimmten Zahlenpaar abhängig von der Klasse, der das zu codierende grafische Muster angehört, beispielsweise einer bestimmten Zeitschrift, zu wählen.

Entsprechend ist es vorteilhaft, die kennzeichnenden Merkmale der Transformation und der Quantisierung, insbesondere die Grenzen der Quantisierungsintervalle sowie ihre Anzahl NA bzw. NG, aufgrund experimenteller Untersuchungen auszuwählen, beispielsweise nach dem Gesichtspunkt, daß ein optimaler Kompromiß zwischen dem Aufwand für die Entscheidungseinrichtungen E und der Sicherheit und Schnelligkeit der Codeaussage gefunden wird. Diese Auswahl kann für verschiedene Musterklassen in unterschiedlicher Weise getroffen werden.

Eine besondere Form dieser Auswahl besteht darin, daß entweder NA oder NG gleich 1 gewählt wird. In diesem Fall erübrigt sich die Ermittlung von $h'(x_i, y_i)$ bzw. $b'(x_i, y_i)$, weil zur Ermittlung des dem Wertepaar zugeordneten Quantisierungsintervalls nur einer der beiden Werte quantisiert werden muß. Die entsprechenden Einrichtungen zur Ermittlung von h' bzw. b' können dann ggf. entfallen.

Eine andere vorteilhafte Weiterbildung des erfindungsgemäßen Verfahrens ist dadurch gekennzeichnet, daß für eine Auswahl zeilen- und spaltenweise angeordneter Abtastpunkte des Teilbereichs mittels einer ersten Quantisierung auf $NA \geq 2$ Stufen quantisierte Helligkeitswerte ermittelt werden, die die Musterhelligkeit in den jeweiligen Abtastpunkten in quantisierter Form darstellen, daß aus den quantisierten Helligkeitswerten mit Hilfe einer zweiten Quantisierung auf $NL \geq 2$ Stufen Lauflängen in quantisierter Form ermittelt werden, daß einer Auswahl der zweidimensionalen Intervalle, die durch die erste und die zweite Quantisierung entstehen, jeweils ein Analyse-Ergebniswert je Intervall zugeordnet wird und daß die Häufigkeit, mit der ein Intervall innerhalb des Teilbereichs auftritt, an den Analyse-Ergebniswert übertragen wird, der diesem Intervall zugeordnet ist. Diese Weiterbildung wird im folgenden anhand von Fig. 5 und Fig. 6 näher erläutert.

Fig. 5 zeigt die Abtastsignale s1(t) und s2(t) der beiden ersten Zeilen eines Teilbereichs sowie mittels einer ersten Quantisierung auf drei Stufen mit den Schwellen 1,5 und 2,5 quantisierte Abtastwerte, die die Musterhelligkeit in den Abtastpunkten dieser beiden Zeilen darstellen. Als Einheit wurde in Fig. 5 0,5 cm zur Darstellung von s1(t) und s2(t) gewählt.

Ferner sind in F i g. 5 Lauflängen L11, L12 . . . L21, L22 . . . L31, L32 . . . eingezeichnet. Hierbei bedeutet beispielsweise L23 die dritte Folge von Helligkeitswerten der zweiten Quantisierungsstufe, die innerhalb des Teilbereichs auftritt.

Fig. 6 zeigt eine Tabelle, in der die neun zweidimensionalen Quantisierungsintervalle, numeriert von 1 bis 9, dargestellt sind, die durch die erste und die zweite Quantisierung entstehen, wobei für die zweite Quantisierung drei Stufen mit den Schwellen 1,5 und 3,5 angenommen wurden.

Ferner ist in Fig. 6 zu jedem Quantisierungsintervall in Klammern die Anzahl der Lauflängen angegeben, die auf das jeweilige Intervall entfallen, wenn nur die in Fig. 5 dargestellten Lauflängen berücksichtigt werden.

Für die Darstellung der Quantisierungsintervalle wurde für beide Koordinaten als Einheit 1 cm gewählt.

Die Stufen der ersten und der zweiten Quantisierung (NA bzw. NL) sowie die jeweiligen Quantisierungsschwellen können experimentell für eine bestimmte Musterklasse in Hinblick auf beliebige Optimalitätskriterien ermittelt werden, ebenso wie die optimale Auswahl der Quantisierungsintervalle, denen ein Analysewert zugeordnet wird.

Eine im Sinne einer Vereinfachung des Verfahrens vorteilhafte Abwandlung ergibt sich dadurch, daß an einen Analyse-Ergebniswert an Stelle der Häufigkeit eines zweidimensionalen Quantisierungsintervalls die Summe der Häufigkeiten mehrerer zweidimensionaler Quantisierungsintervalle übertragen wird, insbesondere die Summe der Häufigkeiten aller Quantisierungsintervalle, die der gleichen Abtastwert-Quantisierungsstufe zugeordnet sind.

Beispielsweise würde, wenn man von den in Fig. 6 dargestellten Quantisierungsintervallen ausgeht, an einen ersten Analysewert die Summe der Häufigkeiten der Intervalle 1, 2 und 3 an einen zweiten Analysewert die Summe der Häufigkeiten der Intervalle 4, 5 und 6 und an einen dritten Analysewert die Summe der Häufigkeiten der Intervalle 7, 8 und 9 übertragen werden, woraus sich die Analysewerte 6, 10 und 2 ergeben.

Inwieweit die optimale Anzahl NA der Quantisierungsstufen der ersten Quantisierung von der zu codierenden Musterklasse abhängt, kann an folgendem Beispiel gezeigt werden:

Falls die Schärfe der Abtastung zur Auflösung des Bild-Druckrasters ausreicht, genügt eine zweistufige Quantisierung (NA=2) der Abtastwerte zur Anwendung des erfindungsgemäßen Verfahrens. Falls diese Voraussetzung nicht gegeben ist, können von einer mehrstufigen Quantisierung (NA > 2) bessere Ergebnisse erwartet werden.

Diese Weiterbildung der Erfindung ist dadurch gekennzeichnet, daß einer Auswahl zweidimensionaler spatialer Frequenzen jeweils ein Analyse-Ergebniswert zugeordnet wird, daß für jede dieser Frequenzen der Betrag des spatialen Energiespektrums des Teilbereichs in ggf. transformierter und über eine Umgebung der Frequenz gemittelter Form ermittelt wird und daß der Betrag an den zugeordneten Analyse-Ergebniswert übertragen wird.

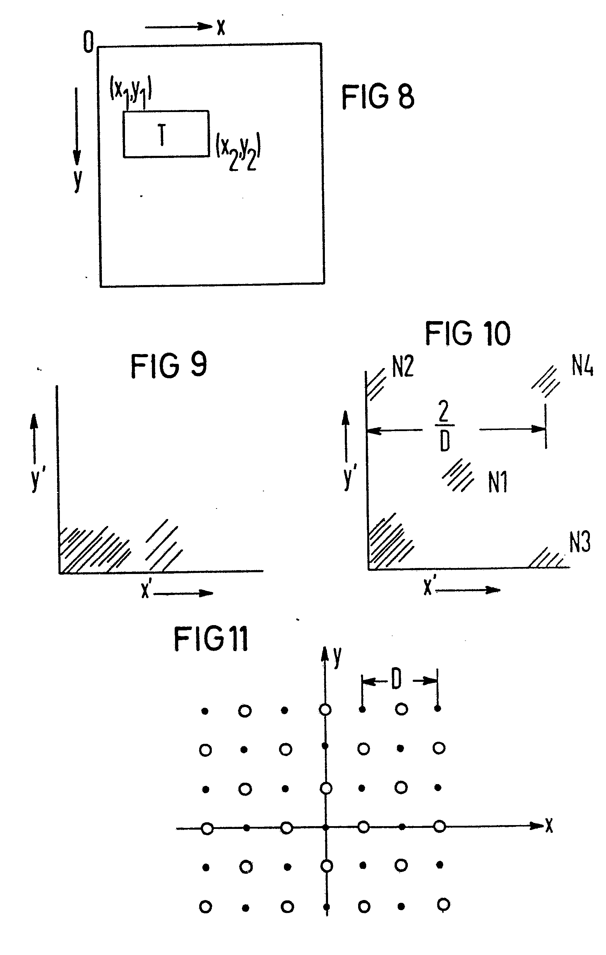

Die nähere Erläuterung dieses Verfahrens erfolgt anhand von Fig. 8 bis Fig. 10.

Fig. 8 stellt ein grafisches Muster mit dem rechteckigen Teilbereich T dar. Bezeichnet man wie in Fig. 8 die Koordinaten zweier einander gegenüberliegender Eckpunkte mit (x1, y1) und (x2, y2), dann errechnet sich in bekannter Weise das zweidimensionale komplexe Spektrum des Teilbereichs für eine zweidimensionale spatiale Frequenz (x′, y′), die aus zwei Komponenten, nämlich den eindimensionalen spatialen Frequenzen x′ und y′ besteht, gemäß der Formel

$$H\,(x',y') = \int_{y=y_1}^{y_2} \int_{x=x_1}^{x_2} h\,(x,y)\,e^{j\,2\,\pi\,(xx'+yy')}\,dx\,dy, \tag{1}$$

worin $h(x, y)$ der Verlauf der Musterhelligkeit, dargestellt als Funktion der Koordinaten, ist.

Unter dem Betrag des Energiespektrums des Teilbereichs wird hier eine Funktion $E(x', y')$ der spatialen Frequenz verstanden, die ihrerseits als Funktion der komplexen Frequenz $H(x', y')$ durch eine der folgenden beiden Formeln definiert ist:

$$E\,(x',y') = |\,H\,(x',y')\,|, \tag{2}$$

$$E\,(x',y') = \sqrt{|\,H\,(x',y')\,|^2 + |\,H\,(x',-y')\,|^2} \tag{3}$$

je nachdem, ob die Frequenzpaare $(x', y')$ und $(x', -y')$ einer gemeinsamen zweidimensionalen spatialen Frequenz $(x', y')$ — wobei sowohl $x'$ als auch $y'$ nicht negativ sind — zugeordnet werden oder nicht.

Die Wirksamkeit des erfindungsgemäßen Verfahrens ist nicht entscheidend davon abhängig, ob die eine oder die andere Darstellung des Energiespektrums entsprechend der einen oder der anderen Formel gewonnen wird.

Die Ermittlung des Energiespektrums bzw. des komplexen spatialen Spektrums ist nur in mehr oder weniger angenäherter oder transformierter Form möglich. Geeignete Transformationsverfahren sind beispielsweise:

a) Integral (1) wird durch eine Summe entsprechend der Formel

$$H\,(x',y') = \sum_{i,k} h\,(x_i, y_k)\,e^{j\,2\,\pi\,(x_i x' + y_k y')}$$

ersetzt, summiert über eine Auswahl von Punkten $(x_i, y_k)$, beispielsweise regelmäßig wie in Fig. 2 angeordneter Punkte.

b) Der durch Formel 2 bzw. 3 angegebene Betrag wird durch eine monoton nichtabnehmende Funktion des Betrags oder durch die Summe der Beträge des Imaginär- und des Realteils von $H(x', y')$ oder durch den Größtwert der beiden Beträge ersetzt.

In jedem Fall erfolgt erfindungsgemäß die Ermittlung des Energiespektrums für eine Auswahl spatialer zweidimensionaler Frequenzen, die ähnlich wie die Musterpunkte in Fig. 2 in regelmäßigen Frequenzabständen innerhalb eines vorgegebenen Frequenzbereichs angeordnet sein können.

Es ist ggf. vorteilhaft, lokale Schwankungen des Energiespektrums durch Anwendung einer Mittelung über die Umgebung der jeweiligen spatialen Frequenz auszugleichen. Eine solche Mittelung kann durch folgende Formel beschrieben werden:

$$F(x', y') = \int\limits_{-\infty}^{\infty} \int\limits_{-\infty}^{\infty} W(u, v)\, E(x'-u, y'-v)\, du\, dv. \tag{2}$$

Hierin bedeutet $W(u, v)$ eine nach Bedarf und Erfahrung wählbare Gewichtsfunktion, E das Energiespektrum, wie oben beschrieben, und $F(x', y')$ das über die Umgebung der Frequenz $(x', y')$ gemittelte Energiespektrum. Das Integral kann wiederum durch eine Summe ersetzt werden.

Beispielsweise erfolgt die Ermittlung von $F(x', y')$ für eine Auswahl spatialer Frequenzen $(x1', y1')$, $(x2', y2')$ ... usw. durch die Mittelung von jeweils vier benachbarten Werten des Energiespektrums entsprechend folgender Formel:

$$F(x', y') = \frac{1}{4}\, (E(x'-\Delta x', y'-\Delta y') + E(x'+\Delta x', y'-\Delta y')$$
$$+ E(x'-\Delta x', y'+\Delta y')$$
$$+ E(x'+\Delta x', y'+\Delta y')), \tag{3}$$

wobei $\Delta x'$ und $\Delta y'$ vorgegebene Frequenzintervalle sind.

Die — ggf. in gemittelter und transformierter Form — gewonnenen Werte des Energiespektrums können nunmehr einer Entscheidungseinrichtung übergeben werden, die daraus eine Entscheidung bezüglich des für den Teilbereich günstigen Code ableiten kann, weil sich die Energiespektren von Bildbereichen und Textbereichen im allgemeinen signifikant unterscheiden. Dies ist in Fig. 9 bis Fig. 11 gezeigt.

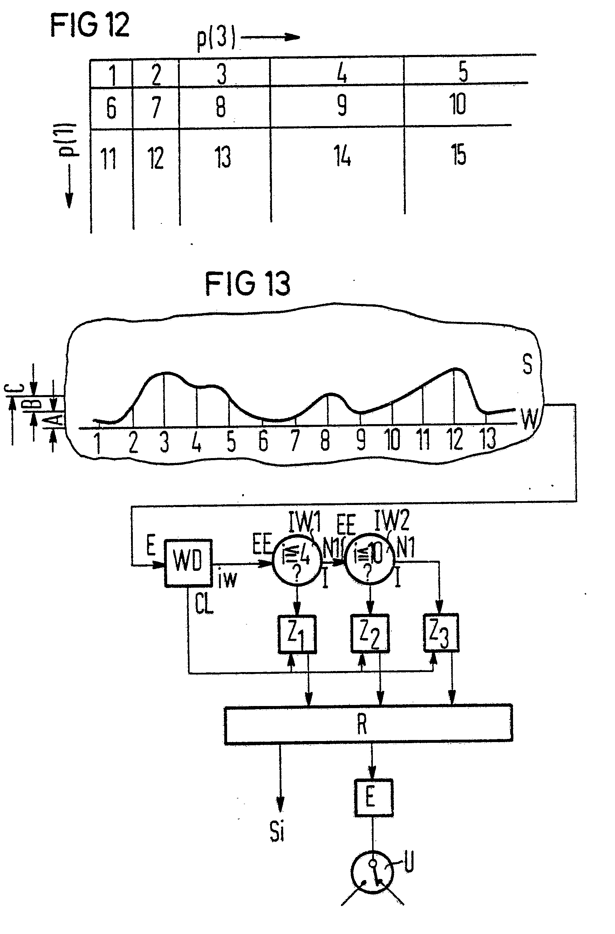

Fig. 9 stellt schematisch das Energiespektrum eines Textbereiches, Fig. 10 das Energiespektrum eines Bildbereiches als Funktion der spatialen zweidimensionalen Frequenz x', y' dar. Es sind jeweils die Frequenzbereiche schraffiert, in denen das gemittelte Energiespektrum eine bestimmte Schwelle überschreitet. In Fig. 10 sind Nebenspektren (N1, N2 ...) erkennbar, die durch die Struktur des in Fig. 11 dargestellten Druckrasters entstehen. In Fig. 11 sind die Stellen schwarzer Rasterpunkte durch Punkte, die Stellen weißer Rasterpunkte durch Kreise gekennzeichnet.

Eine weitere vorteilhafte Weiterbildung der Erfindung stellt ein Verfahren zur Gewinnung einer Code- und einer Sicherheitsaussage aus einer vorgegebenen Anzahl von Analysewerten, wie sie sich bei Anwendung der Weiterbildungen der Erfindung ergeben, die vorteilhafte Analyseverfahren betreffen, dar.

Dieses Verfahren ist dadurch gekennzeichnet, daß für alle bis auf einen Analysewert der relative Anteil des Analysewertes aus der Summe aller Analysewerte ermittelt wird, daß durch Quantisierung besagter Anteile ein mehrdimensionales Intervall ermittelt wird, daß ein Speicher vorhanden ist, in dem jedem möglichen Intervall ein Speicherbereich zugeordnet ist, daß jeder Speicherbereich eine Code- und ggf. eine Sicherheitsaussage enthält und das aus dem Speicherbereich, der dem ermittelten Intervall zugeordnet ist, die Code- und ggf. auch die Sicherheitsaussage entnommen wird.

Das Verfahren wird im folgenden an Hand von Formeln sowie eines numerischen Beispiels näher erläutert.

N bezeichnet die Anzahl der Analysewerte, z (1), z(2), ... z(N) die Analysewerte selbst. Es wird vorausgesetzt, daß die Analysewerte nicht negativ sind.

Mit dieser Annahme ist der relative Anteil des Analysewertes z(k) gegeben durch

$$p(k) = z(k)\, /\, \sum_{i=1}^{N} z(i).$$

Die N Anteile p(k) sind voneinander nicht unabhängig, weil ihre Summe 1 ist. Deshalb sind sie durch eine Auswahl von (N-1) Anteilen eindeutig bestimmt. Der nicht berücksichtigte Anteil sei p(k'), wobei k' eine aus dem Bereich (1, N) ausgewählte Nummer ist.

Wenn man nun für alle Anteile p(k) mit Ausnahme von p(k'), der nicht ermittelt zu werden braucht, eine Quantisierung mit jeweils S(k) Stufen vornimmt, so bedeutet dies, daß man das durch die N Analysewerte dargestellte Analyseergebnis einem von insgesamt

$$\prod_{k=1, k'}^{N} S(k)$$

(N-1)-dimensionalen Quantisierungsintervallen zuordnet. Dies wird an folgendem Beispiel sowie mittels Fig. 12 erläutert.

Es sei N = 3, und die drei Analysewerte seien:

$$z(1) = 2, z(2) = 3, z(4) = 5.$$

Es sei k = 2 gewählt, d. h. der zweite Analysewert wird bei der Auswahl von (N-1) = 2 Analysewerten nicht berücksichtigt. Somit werden ermittelt:

$$p(1) = 2/10 = 0,2$$
$$p(3) = 5/10 = 0,5.$$

Es seien für die Analysewerte p(1) und p(3) folgende Quantisierungen gewählt:

Für p(1) die Stufenzahl S(1) = 3 mit den Schwellen 0,05 und 0,15;
für p(2) die Stufenzahl S(3) = 5 mit den Schwellen: 0,1; 0,2; 0,4; 0,7.

Durch diese Quantisierung sind die in Fig. 12 dargestellten $3 \cdot 5 = 15$ 2-dimensionalen Intervalle definiert. Das oben als Beispiel angeführte Analyseergebnis wird dem in Fig. 12 mit 14 bezeichneten Intervall zugeordnet.

Der Maßstab von Fig. 12 wurde entsprechend 1 cm = 0,1 gewählt.

Die Zuordnung eines Speicherbereichs zu einem bestimmten mehrdimensionalen Intervall kann beispielsweise so erfolgen:

Die möglichen Quantisierungsintervalle werden fortlaufend mit 1 beginnend, beispielsweise nach dem in Fig. 12 dargestellten Muster, numeriert. Sobald ein Intervall ermittelt ist, wird das Produkt der Intervallnummer (C) und einer vorgegebenen natürlichen Zahl B ermittelt.

Das Produkt $C \times B$ wird als eine in Bit gemessene Distanzadresse zum Beginn eines als Tabelle benutzten Speicherfeldes innerhalb eines Datenspeichers verwendet. In dieser Tabelle ist in jeweils B aufeinanderfolgenden Bits die Nummer des für den betroffenen Teilbereich optimalen Code angegeben.

Für B = 1 ist durch den Inhalt der Tabelle die Entscheidung zwischen einem Textcode bei einem bestimmten Tabellenplatzinhalt, z. B. 0, oder einem Bildcode bei dem anderen Tabellenplatzinhalt, nämlich 1, festgelegt. Der Inhalt der Tabelle wird durch statistische Auswertung einer gegebenen Menge von repräsentativen Mustern ermittelt.

Die charakteristische Zahl C wird für einen oder mehrere Teilbereiche jedes Musters der repräsentativen Menge ermittelt. Aus der charakteristischen Zahl C wird außerdem ein Speicherbereich der Tabelle ermittelt. Dieser Speicherbereich wird mit der Nummer des für den jeweiligen Teilbereich optimalen Code gefüllt, wobei vorausgesetzt wird, daß dieser optimale Code bekannt ist. Nach einer Auswertung aller grafischen Muster der repräsentativen Menge wird für jeden Wert der charakteristischen Zahl C, der in der zu codierenden Klasse von grafischen Mustern bei der Auswertung eines Teilbereichs auftreten kann, geprüft, ob der betreffende Tabellenplatz gefüllt worden ist.

Für die Prüfung der betroffenen Tabellenplätze wird ein Hilfsspeicher benutzt, in dem jedem Wert der charakteristischen Zahl C ein Bit zugeordnet ist. Allen Bit-Plätzen des Hilfsspeicherfeldes wird vor dem Beginnen einer Auswertung der grafischen Muster der repräsentativen Menge der Binärwert 0 zugewiesen. Während der Auswertung dieser grafischen Muster wird jedesmal, wenn ein Wert für die charakteristische Zahl C bestimmt worden ist, dem diesem entsprechenden Bit-Platz des Hilfsspeicherfeldes der Binärwert 1 zugewiesen.

Nach dem Auffinden eines nicht gefüllten Tabellenplatzes wird die der diesem zugeordneten charakteristischen Zahl C ähnlichste charakteristische Zahl C' ermittelt. Der betreffende Tabellenplatz wird mit dem Inhalt des Tabellenplatzes, der der ähnlichsten charakteristischen Zahl C' zugeordnet ist, gefüllt.

Die einer bestimmten charakteristischen Zahl C jeweils ähnlichste charakteristische Zahl C' wird mittels einer Distanzfunktion dadurch ermittelt, daß mit der charakteristischen Zahl C sämtliche charakteristischen Zahlen verglichen werden, denen im Hilfsspeicher der Binärwert 1 zugeordnet wurde. Als ähnlichste charakteristische Zahl C' wird diejenige Zahl gewählt, für die die Distanzfunktion die minimale Abweichung zwischen der charakteristischen Zahl C und der ähnlichsten charakteristischen Zahl C' ergibt. Als Distanzfunktion kann beispielsweise die Summe der absoluten Unterschiede der Stellen der beiden charakteristischen Zahlen C, C' verwendet werden.

Für den Fall, daß n > 1 charakteristische Zahlen $C_1' \ldots C_n'$ gleicher Ähnlichkeit, nämlich mit gleicher Distanzfunktion, gefunden werden, wird diejenige charakteristische der Zahlen $C_1' \ldots C_n'$ ausgewählt, die sich durch die algebraische Differenz am wenigsten von der zugeordneten charakteristischen Zahl C unterscheidet.

Gemäß einer anderen Weiterbildung der Erfindung ist in einem Teil des Speicherfeldes von B Bit, das jeder charakteristischen Zahl C zugeordnet ist, eine zweite Aussage über die Sicherheit der in den übrigen Stellen des Speicherfeldes festgelegten Aussage enthalten.

Gemäß einer anderen Weiterbildung der Erfindung wird die Auswahl aus einer Anzahl alternativer Codes unter Berücksichtigung ihrer ihnen jeweils zugeordneten Bewertungsmaße getroffen.

Die oben erwähnte zweite Aussage über die Sicherheit wird gemäß einer anderen Weiterbildung der Erfindung aus der Anzahl und Art der für die ähnlichsten n charakteristischen Zahlen $C_1' \ldots C_n'$ gefundenen Codeaussagen ermittelt, wobei die jeweilige Distanz zu der charakteristischen Zahl $C$ berücksichtigt wird.

Wenn ein Tabellenplatz beim Erstellen der Tabelle als bereits gefüllt erkannt wird, wird die gerade ermittelte charakteristische Zahl $C$ mit der Nummer des optimalen Code in einer Zusatztabelle vermerkt. Diese Zusatztabelle wird nach dem Erstellen der Tabelle geprüft. Für alle charakteristischen Zahlen $C$, die in der Zusatztabelle mehrfach mit unterschiedlichen Codenummern auftreten, wird ein optimaler Code durch eine Kompromißentscheidung bestimmt. Diese Kompromißentscheidung kann gemäß einem Ausführungsbeispiel für die Erfindung durch eine Majoritätsentscheidung getroffen werden, gemäß der derjenige Code, der für die gleiche charakteristische Zahl $C$ in der Tabelle und in der Zusatztabelle am häufigsten auftritt, endgültig in die Tabelle eingetragen wird. Die genannte Kompromißentscheidung kann auch vorteilhafterweise derart getroffen werden, daß nach dem Prinzip des minimalen Schadens verfahren wird, wobei derjenige Code in die Tabelle eingetragen wird, der für eine Übertragung, eine Wiedergabe oder andere Vorgänge sowohl für Bildbereiche als auch für Textbereiche den optimalen Kompromiß darstellt.

Einrichtungen, die zur Realisierung des erfindungsgemäßen Verfahrens zur Gewinnung einer Code- und einer Sicherheitsaussage geeignet sind, sind Stand der Technik. Beispielsweise eignet sich hierfür ein programmierter Prozeß-Rechner, dem an N Eingängen die N Analysewerte in analoger oder digitaler Form zugeführt werden, und der an einem Ausgang die dem Analyseergebnis zugeordnete Code- und Sicherheitsaussage in Form eines digitalen Signals bereit stellt. Programmierbare Prozeß-Rechner sind in einer großen Zahl verschiedenster Ausführungen auf dem Markt erhältlich.

Fig. 13 zeigt eine Schaltungsanordnung zur Durchführung eines Teils des erfindungsgemäßen Verfahrens, bei der ein Abtastwertdecoder WD mit einem Signaleingang E zum Eingeben von durch ein Abtastorgan erzeugten Abtastimpulsen mit einem Signalausgang in zum Ausgeben von erkannte Abtastwerte repräsentierenden Ausgangssignalen und einem Rückstellausgang CL zum Ausgeben von Rückstellsignalen vorgesehen ist. Außerdem sind zwei in Kaskade geschaltete, jeweils als Schwellwertglied ausgeführte, mit jeweils einem ersten Entscheidungsausgang N1 einem zweiten Entscheidungsausgang J und jeweils einem Entscheidungseingang EE ausgestattete Intervalldecoder IW1 und IW2 vorgesehen. Der Entscheidungseingang EE des ersten Intervalldecoders IW1 der Kaskade ist mit dem Signalausgang iw, dessen erster Entscheidungsausgang N1 mit dem Entscheidungseingang EE des zweiten Intervalldecoders IW2 der Kaskade, der erste Entscheidungsausgang N1 des zweiten Intervalldecoders IW2 mit dem Signaleingang eines Intervallzählers $Z_3$ und jeweils der zweite Entscheidungsausgang J des ersten bzw. zweiten Intervalldecoders IW1 bzw. IW2 mit dem Signaleingang eines Intervallzählers $Z_1$ bzw. $Z_2$ verbunden. Die Zählausgänge der Intervallzähler $Z_1$, $Z_2$, $Z_3$ sind mit entsprechenden Dateneingängen eines Rechenwerks R zum Ermitteln der charakteristischen Zahl $C$ verbunden. Ein Ausgang des Rechenwerks R ist zum Übertragen der ermittelten charakteristischen Zahl $C$ an einen Dateneingang eines Entscheiders E angeschlossen. Dessen Signalausgang ist an den Steuereingang eines Codeumschalters U angeschlossen.

Das Rechenwerk R hat einen weiteren, ein Sicherheitssignal abgebenden Ausgang. Zum Rückstellen der Intervallzähler $Z_1$, $Z_2$, $Z_3$ ist der Rückstellausgang CL des Abtastwertdecoders WD mit Rückstelleingängen der Intervallzähler $Z_1$, $Z_2$, $Z_3$ verbunden.

## Patentansprüche

1. Verfahren zur Codierung von elektrischen Signalen, die bei der Abtastung eines graphischen Musters mit aus Text und Bildern gemischtem Inhalt gewonnen werden, wobei das graphische Muster in Teilbereiche unterteilt ist, dadurch gekennzeichnet, daß in einer Analyse erster Art (Begrenzungsanalyse) (A1) mindestens ein Teilbereich innerhalb des graphischen Musters ermittelt wird, daß das von der Abtastung des Teilbereichs herrührende Abtastsignal einer folgenden Analyse oder mehreren folgenden Analysen zweiter Art (Bereichsanalyse) (A2) unterzogen wird, daß die Ergebnisse der Bereichsanalysen zur Gewinnung jeweils einer Codeaussage und einer Sicherheitsaussage ausgewertet werden und daß aufgrund einer Bewertung sämtliche Code- und Sicherheitsaussagen einer von mindestens zwei vorgegebenen Codes zur Codierung des Teilbereichs (T) ausgewählt wird.

2. Verfahren nach Anspruch 1, dadurch gekennzeichnet, daß als Grenzen eines Teilbereichs Weißblöcke und/oder Spaltengrenzen verwendet werden.

3. Verfahren nach Anspruch 1 oder 2, dadurch gekennzeichnet, daß jeweils ein Punkt des begrenzenden Weißblocks demjenigen Teilbereich zugeordnet wird, von dem er die geringste Entfernung hat.

4. Verfahren nach Anspruch 1 oder 2, dadurch gekennzeichnet, daß ein begrenzender Weißblock oder ein Teil dieses Weißblocks keinem der von ihm begrenzten Teilbereiche zugeordnet wird, sondern als selbstständiger Teilbereich codiert wird.

5. Verfahren nach Anspruch 4, dadurch gekennzeichnet, daß zur Codierung ein erster Code für den Text verwendet wird.

6. Verfahren nach Anspruch 1, dadurch gekennzeichnet, daß für jeweils einen Teilbereich eine Codierung mit einem ersten Code für den Text vorgenommen wird, wenn der Teilbereich an einer Mindestzahl von Seiten, zumindest jedoch an zwei sich gegenüberliegenden Seiten von Weißblöcken und/oder Spaltengrenzen begrenzt ist, deren Entfernung einen vorgegebenen Maximalwert nicht überschreitet.

7. Verfahren nach Anspruch 6, dadurch gekennzeichnet, daß die Mindestzahl und/oder der Maximalwert in Abhängigkeit von der zu codierenden Musterart manuell oder automatisch eingestellt werden.

8. Verfahren nach einem der Ansprüche 1 bis 6, dadurch gekennzeichnet, daß die Analysen erster und zweiter Art (A1, A2) entweder sequentiell oder simultan unter Verwendung gleichartiger Einrichtungen, ggf. eines Multiprozessorsystems für verschiedene Bereiche des graphischen Musters erfolgen.

9. Verfahren nach einem der vorhergehenden Ansprüche, dadurch gekennzeichnet, daß für mehrere Teilbereiche (T) des graphischen Musters die Codierung der Teilbereiche (T) zu irgendeinem Zeitpunkt nach Verfügbarkeit der jeweiligen Analyseergebnisse entweder sequentiell oder simultan unter Verwendung mehrerer gleichartiger Einrichtungen, ggf. eines Multiprozessorsystems für verschiedene Bereiche des graphischen Musters erfolgt.

10. Verfahren nach einem der vorhergehenden Ansprüche, dadurch gekennzeichnet, daß die Codierung eines Teilbereichs (T) mit mindestens einem vorbestimmten Code bereits vor der Ermittlung des für den Teilbereich (T) zu verwendenden Codes vorgenommen wird, daß die erzeugten Codesignale zwischengespeichert werden und daß jeweils nach Ermittlung des für den Teilbereich (T) zu verwendenden Code ggf. das Codesignal nicht durch erneute Codierung, sondern durch Auswahl aus den bereits gespeicherten Codesignalen erzeugt wird.

11. Verfahren nach einem der vorhergehenden Ansprüche, dadurch gekennzeichnet, daß für den Fall, daß bestimmte Verfahrenselemente, sei es die Ermittlung von Teilbereichen (T), sei es die Ermittlung eines optimalen Code für einen bestimmten Teilbereich (T), durch die Entnahme der Daten, die als Ergebnis des Verfahrenselementes anfallen würden, aus einem Datenspeicher oder durch manuelle Einstellung ersetzt werden, falls die jeweiligen Daten bekannt sind.

12. Verfahren nach Anspruch 11, dadurch gekennzeichnet, daß für den Fall, daß der Datenspeicher für eine bestimmte Art graphischer Muster, beispielsweise für bestimmte Zeitschriften oder bestimmte Seiten einer Zeitschrift, mit Daten gefüllt wird, die für diese Musterart charakteristisch sind.

13. Verfahren nach einem der vorhergehenden Ansprüche, dadurch gekennzeichnet, daß das graphische Muster in Ausschnitte, vorzugsweise Streifen, unterteilt wird und daß die Anwendung des erfindungsgemäßen Verfahrens sequentiell oder simultan für mehrere Ausschnitte erfolgt.

14. Verfahren nach einem der vorhergehenden Ansprüche, dadurch gekennzeichnet, daß ein Teilbereich (T), der zumindest einseitig durch eine Ausschnittsgrenze begrenzt wird, die innerhalb des graphischen Musters liegt, zusammen mit einem anschließenden Musterausschnitt codiert wird, sofern die für den Teilbereich (T) ausgeführte Analyse zweiter Art (A2) keine ausreichende Sicherheitsaussage ergibt.

15. Verfahren nach einem der vorhergehenden Ansprüche, dadurch gekennzeichnet, daß das Abtastsignal vor Ausführung der Begrenzungs- und/oder Bereichsanalyse einer Vorfilterung unterzogen wird, die einer Abtastung mit derart verringerter Schärfe entspricht, daß die Druckrasterstruktur, ggf. nur in horizontaler Richtung, unterdrückt wird.

16. Verfahren nach einem der vorhergehenden Ansprüche, dadurch gekennzeichnet, daß für eine Auswahl von Abtastpunkten des Teilbereichs (T) aus dem Abtastsignal die Musterhelligkeit und/oder der Betrag des Gradienten der Musterhelligkeit in transformierter und quantisierter Form ermittelt wird, daß eine Auswahl der ein- bzw. zweidimensionalen Intervalle, die durch die Quantisierung entstehen, jeweils ein Analyseergebniswert je Intervall zugeordnet wird und daß die Häufigkeit, mit der ein Intervall innerhalb des Teilbereichs (T) auftritt, an den Analyse-Ergebniswert übertragen wird, der diesem Intervall zugeordnet ist.

17. Verfahren nach Anspruch 16, dadurch gekennzeichnet, daß die Auswahl der Abtastpunkte und/oder der Intervalle von der Klasse abhängig gemacht wird, der das betreffende graphische Muster angehört.

18. Verfahren nach einem der vorhergehenden Ansprüche, dadurch gekennzeichnet, daß für eine Auswahl zeilen- und spaltenweise angeordneter Abtastpunkte des Teilbereichs mittels einer ersten Quantisierung auf $NA \geq 2$ Stufen quantisierter Helligkeitswerte ermittelt werden, die die Musterhelligkeit in den jeweiligen Abtastpunkten in quantisierter Form darstellen, daß aus den quantisierten Helligkeitswerten mit Hilfe einer zweiten Quantisierung auf $NL \geq 2$ Stufen Lauflängen in quantisierter Form ermittelt werden, daß einer Auswahl der zweidimensionalen Intervalle, die durch die erste und die zweite Quantisierung entstehen, jeweils ein Analyseergebniswert je Intervall zugeordnet wird und daß die Häufigkeit, mit der ein Intervall innerhalb des Teilbereichs (T) auftritt, an den Analyseergebniswert übertragen wird, der diesem Intervall zugeordnet ist.

19. Verfahren nach Anspruch 18, dadurch gekennzeichnet, daß an einen Analyse-Ergebniswert anstelle der Häufigkeit eines zweidimensionalen Quantisierungsintervalls die Summe der Häufigkeiten mehrerer zweidimensionaler Quantisierungsintervalle übertragen wird, insbesondere die Summe der Häufigkeiten aller Quantisierungsintervalle, die der gleichen Abtastwert-Quantisierungsstufe zugeordnet sind.

20. Verfahren nach Anspruch 19, dadurch gekennzeichnet, daß einer Auswahl zweidimensionaler spatialer Frequenzen jeweils ein Analyse-Ergebniswert zugeordnet wird, daß für jede dieser Frequenzen der Betrag des spatialen Energiespektrums des Teilbereichs in ggf. transformierter und über eine Umgebung der Frequenz gemittelter Form ermittelt wird und daß der Betrag an den zugeordneten Analysen-Ergebniswert übertragen wird.

21. Vorrichtung zur Durchführung des Verfahrens nach einem der vorhergehenden Ansprüche, dadurch gekennzeichnet, daß eine Abtasteinrichtung (A) zum ggf. ausschnittsweisen Abtasten graphischer Muster (M) vorgesehen ist, die das gewonnene Abtastsignal einem nachgeschalteten ersten Pufferspeicher (P1) in digitaler Form zuführt, daß mit dem ersten Pufferspeicher (P1) eine erste Analyse-Einrichtung (A1) zur Ermittlung der Grenzen von Teilbereichen (T) innerhalb des graphischen Musters (M) verbunden ist, daß an die erste Analyse-Einrichtung (A1) eine zweite Analyse-Einrichtung (A2) zur Übernahme der von der ersten Analyse-Einrichtung (A1) ermittelten, die Grenzen der Teilbereiche (T) repräsentierenden Daten angeschlossen ist, die zum Analysieren des Musters (M) innerhalb eines Teilbereichs (T) dient, daß die zweite Analyse-Einrichtung (A2) außerdem mit dem ersten Pufferspeicher (P1) zur Übernahme der jeweils zu analysierenden Abtastwerte verbunden ist, daß an die zweite Analyse-Einrichtung (A2) eine Entscheidungseinrichtung (E) angeschlossen ist, die die Entscheidung trifft, welcher von mindestens zwei vorgegebenen Codes zur Codierung jeweils eines Teilbereichs (T) zu verwenden ist, daß diese Entscheidung an einen der Entscheidungseinrichtung (E) nachgeordneten Coder (CD) weitergeleitet wird, der die zu codierenden Abtastwerte über eine Verbindung mit dem ersten Pufferspeicher (P1) übernimmt und daß an den Coder (CD) ein zweiter Pufferspeicher (P2) angeschlossen ist, der von dem Coder (CD) die codierten Abtastwerte übernimmt, von wo aus diese codierten Abtastwerte einem ggf. beteiligten Kommunikationspartner oder einem weiteren Speicher (beispielsweise dem einer Datenverarbeitungsanlage, Datenbank oder dgl.) übermittelbar ist (Fig. 7).

22. Vorrichtung nach Anspruch 21, dadurch gekennzeichnet, daß der Coder (CD) über eine Rückmeldeverbindung mit der Abtasteinrichtung (A) verbunden ist, über die die erfolgte Codierung eines oder mehrerer Teilbereiche (T) und die erfolgte Übertragung der entsprechenden Codesignale an den zweiten Pufferspeicher (P2) signalisiert wird, wodurch die Abtasteinrichtung (A) zur Abtastung eines zweiten Ausschnitts des graphischen Musters (M) aufgefordert wird.

23. Vorrichtung nach Anspruch 21 oder 22, dadurch gekennzeichnet, daß die erste Analyseeinrichtung (A1) über eine Zusatzverbindung unmittelbar mit dem Coder (CD) verbunden ist, über die ggf. nach Ermittlung der Grenzen eines Teilbereichs (T) die Auswahl eines für diesen Teilbereich (T) zu verwendenden Code übermittelt werden kann, sofern bereits aus der Ermittlung der Grenzen eine solche Aussage getroffen werden kann.

24. Vorrichtung nach einem der Ansprüche 21 bis 23, dadurch gekennzeichnet, daß die Entscheidungseinrichtung (E) über eine Rückmeldeverbindung mit der ersten Analyse-Einrichtung (A1) verbunden ist, über die ggf. ein Zurückweisungssignal an die erste Analyse-Einrichtung (A1) übertragen wird.

25. Vorrichtung nach einem der vorhergehenden Ansprüche, dadurch gekennzeichnet, daß für jeweils ein ausgewähltes ein- oder zweidimensionales Quantisierungsintervall je ein Zähler vorhanden ist, der vor der Analyse eines Teilbereichs (T) auf Null gestellt wird und der jeweils um 1 erhöht wird, wenn ein Punkt des graphischen Musters (M) dem jeweiligen Intervall durch die zweite Analyse-Einrichtung (A2) zugeordnet wird.

26. Verfahren nach einem der Ansprüche 1 bis 20, dadurch gekennzeichnet, daß für alle bis auf einen Analysewert der relative Anteil des Analysewertes an der Summe aller Analysewerte ermittelt wird, daß durch Quantisierung besagter Anteile ein mehrdimensionales Intervall ermittelt wird, daß ein Speicher vorhanden ist, in dem jedem möglichen Intervall ein Speicherbereich zugeordnet ist, daß jeder Speicherbereich eine Code- und ggf. eine Sicherheitsaussage enthält und daß aus dem Speicherbereich, der dem ermittelten Intervall zugeordnet ist, die Code- und ggf. auch die Sicherheitsaussage entnommen wird.

27. Verfahren nach Anspruch 26, dadurch gekennzeichnet, daß nach dem Ermitteln eines Intervalls ein Produkt einer diesem Intervall zugeordneten Intervallnummer $(C \cdot I)$ und einer vorgegebenen natürlichen Zahl (B) ermittelt wird.

28. Verfahren nach Anspruch 27, dadurch gekennzeichnet, daß der Ausdruck $C \times B$ für eine vorbestimmte Funktion $(f(C))$ der Intervallnummer oder charakteristischen Zahl C als eine in bit gemessene Distanzadresse zum Beginn eines als Tabelle benutzten Speicherfeldes innerhalb eines Datenspeichers verwendet wird und daß in der Tabelle in jeweils B aufeinanderfolgenden bits die Nummer des für den betroffenen Teilbereich optimalen Code angegeben ist.

29. Verfahren nach Anspruch 28, dadurch gekennzeichnet, daß für $B = 1$ durch den Inhalt der Tabelle

14

die Entscheidung zwischen einem Textcode bei einem bestimmten Tabellenplatzinhalt, z. B. null, oder einem Bildcode mit dem anderen Tabellenplatzinhalt, nämlich eines, festgelegt ist.

30. Verfahren nach Anspruch 28 oder 29, dadurch gekennzeichnet, daß der Inhalt der Tabelle durch statistische Auswertung einer gegebenen Menge von repräsentativen Mustern ermittelt wird.

31. Verfahren nach Anspruch 30, dadurch gekennzeichnet, daß für einen oder mehrere Teilbereiche (T) jedes Musters (M) einer repräsentativen Menge die charakteristische Zahl (C) und aus dieser ein Speicherbereich der Tabelle ermittelt wird und daß dieser Speicherbereich mit der Nummer des für den jeweiligen Teilbereich (T) optimalen Code gefüllt wird, wobei vorausgesetzt wird, daß dieser optimale Code bekannt ist.

32. Verfahren nach den Ansprüchen 30 und 31, dadurch gekennzeichnet, daß nach einer Auswertung aller graphischen Muster der repräsentativen Menge für jeden Wert der charakteristischen Zahl (C) der in der zu codierenden Klasse von graphischen Mustern (M) bei der Auswertung eines Teilbereiches (T) auftreten kann, geprüft wird, ob der betreffende Tabellenplatz gefüllt worden ist.

33. Verfahren nach Anspruch 32, dadurch gekennzeichnet, daß für die Prüfung der betroffenen Tabellenplätze ein Hilfsspeicher benutzt wird, in dem jedem Wert der charakteristischen Zahl (C) ein bit zugeordnet ist.

34. Verfahren nach Anspruch 33, dadurch gekennzeichnet, daß allen bit-Plätzen des Hilfsspeicherfeldes vor dem Beginnen einer Auswertung der graphischen Muster (M) der repräsentativen Menge der Binärwert 0 zugewiesen wird und daß während der Auswertung dieser graphischen Muster jeweils, wenn ein Wert für die charakteristische Zahl (C) bestimmt worden ist, dem diesem entsprechenden bit-Platz des Hilfsspeicherfeldes der Binärwert 1 zugewiesen wird.

35. Verfahren nach Anspruch 33, dadurch gekennzeichnet, daß nach dem Auffinden eines nichtgefüllten Tabellenplatzes die der diesem zugeordneten charakteristischen Zahl (C) ähnlichste charakteristische Zahl (C') ermittelt wird und daß der betreffende Tabellenplatz mit dem Inhalt des Tabellenplatzes, der der ähnlichsten charakteristischen Zahl (C') zugeordnet ist, gefüllt wird.

36. Verfahren nach Anspruch 35, dadurch gekennzeichnet, daß die jeweils ähnlichste charakteristische Zahl (C') mittels einer Distanzfunktion dadurch ermittelt wird, daß mit der charakteristischen Zahl (C) sämtliche charakteristische Zahlen verglichen werden, denen im Hilfsspeicher der Binärwert 1 zugeordnet wurde und als ähnlichste charakteristische Zahl (C') diejenige Zahl gewählt wird, für die die Distanzfunktion die minimale Abweichung zwischen der charakteristischen Zahl (C) und der ähnlichsten charakteristischen Zahl (C') ergibt.

37. Verfahren nach Anspruch 36, dadurch gekennzeichnet, daß als Distanzfunktion die Summe der absoluten Unterschiede der Stellen der beiden charakteristischen Zahlen (C, C') verwendet wird.

38. Verfahren nach Anspruch 35, dadurch gekennzeichnet, daß für den Fall, daß $n > 1$ charakteristische Zahlen ($C_1' \ldots C_n'$) gleicher Ähnlichkeit, nämlich mit gleicher Distanzfunktion, gefunden werden, diejenige charakteristische der Zahlen ($C_1' \ldots C_n'$) ausgewählt wird, die sich durch die algebraische Differenz am wenigsten von der zugeordneten charakteristischen Zahl (C) unterscheidet.

39. Verfahren nach Anspruch 38, dadurch gekennzeichnet, daß in einem Teil des Speicherfeldes von B bit, das jeder charakteristischen Zahl (C) zugeordnet ist, eine zweite Aussage über die Sicherheit der in den übrigen Stellen des Speicherfeldes festgelegten Aussage enthalten ist.

40. Verfahren nach Anspruch 1, dadurch gekennzeichnet, daß die Auswahl aus einer Anzahl alternativer Codes unter Berücksichtigung ihrer ihnen jeweils zugeordneten Bewertungsmaße getroffen wird.

41. Verfahren nach den Ansprüchen 30, 34, 37 und 38, dadurch gekennzeichnet, daß die zweite Aussage aus der Anzahl und Art der für die ähnlichsten n charakteristischen Zahlen ($C_1' \ldots C_n'$) gefundenen Codeaussagen ermittelt wird, wobei die jeweilige Distanz zu der charakteristischen Zahl (C) berücksichtigt wird.

42. Verfahren nach den Ansprüchen 32 und 35, dadurch gekennzeichnet, daß, wenn ein Tabellenplatz beim Erstellen der Tabelle als bereits gefüllt erkannt wird, die gerade ermittelte charakteristische Zahl (C) mit der Nummer des optimalen Code in einer Zusatztabelle vermerkt wird, daß die Zusatztabelle nach dem Erstellen der Tabelle geprüft wird und und daß für alle charakteristischen Zahlen (C), die in der Zusatztabelle mehrfach mit unterschiedlichen Codenummern auftreten, ein optimaler Code durch eine Kompromißentscheidung bestimmt wird.

43. Verfahren nach Anspruch 42, dadurch gekennzeichnet, daß die Kompromißentscheidung eine Majoritätsentscheidung ist, gemäß der derjenige Code, der für die gleiche charakteristische Zahl (C) in der Tabelle und in der Zusatztabelle am häufigsten auftritt, endgültig in die Tabelle eingetragen wird.

44. Verfahren nach Anspruch 42, dadurch gekennzeichnet, daß die Kompromißentscheidung derart getroffen wird, daß nach dem Prinzip des minimalen Schadens verfahren wird, wobei derjenige Code in die Tabelle eingetragen wird, der für eine Übertragung, eine Wiedergabe oder für andere Vorgänge sowohl für Bildbereiche als auch für Textbereiche den optimalen Kompromiß darstellt.

45. Schaltungsanordnung zur Durchführung des Verfahrens nach einem oder mehreren der vorhergehenden Ansprüche, dadurch gekennzeichnet, daß ein Abtastwertdecoder (WD) mit einem Signaleingang (E) zum Eingeben von durch ein Abtastorgan erzeugten Abtastimpulsen, mit einem Signalausgang (iw) zum Ausgeben von erkannte Abtastwerte repräsentierenden Ausgangssignalen

**0 042 981**

und einem Rückstellausgang (CL) zum Ausgeben von Rückstellsignalen vorgesehen ist, daß zwei in Kaskade geschaltete, jeweils als Schwellwertglied ausgeführte, mit jeweils einem ersten Entscheidungsausgang (N1), einem zweiten Entscheidungsausgang (J) und jeweils einem Entscheidungseingang (EE) ausgestattete Intervalldecoder (IW1, IW2) vorgesehen sind, wobei der Entscheidungseingang (EE) des ersten Intervalldecoders (IW1) der Kaskade mit dem Signalausgang (iw), dessen ersten Entscheidungsausgang (N1) mit dem Entscheidungseingang (EE) des zweiten Intervalldecoders (IW2) der Kaskade, der erste Entscheidungsausgang (N1) des zweiten Intervalldecoders (IW2) mit den Signaleingang eines Intervallzählers (Z3) und jeweils der zweite Entscheidungsausgang (J) des ersten bzw. des zweiten Intervalldecoders (IW1 bzw. IW2) mit dem Signaleingang eines Intervallzählers ($Z_1$ bzw. $Z_2$) verbunden ist, daß die Zählausgänge der Intervallzähler ($Z_1$, $Z_2$, $Z_3$) mit entsprechenden Dateneingängen eines Rechenwerks (R) zum Ermitteln der charakteristischen Zahl (C) verbunden sind, daß ein Ausgang des Rechenwerks (R) zum Übertragen der charakteristischen Zahl (C) an einen Dateneingang eines Entscheiders (E) angeschlossen ist, dessen Signalausgang an den Steuereingang eines Codeumschalters (U) angeschlossen ist, daß das Rechenwerk (R) einen weiteren, ein Sicherheitssignal (Si) abgebenden Ausgang hat und daß der Rückstellausgang (CL) des Abtastwertdecoders (WD) mit den Rückstelleingängen der Intervallzähler ($Z_1 \ldots Z_3$) verbunden ist.

## Claims

1. A method of coding electric signals obtained during the sampling of a graphic pattern which possesses a mixed content of text and images, wherein the graphic pattern is subdivided into subsidiary zones, characterised in that in an analysis of a first type (boundary analysis) (A1) at least one subsidiary zone within the graphic pattern is determined, that the sample signal derived from the sampling of the subsidiary zone is subjected to one or more subsequent analyses of a second type (zone analysis) (A2), that the results of the zone analyses are evaluated in order to obtain a code statement and an security statement, and that on the basis of an evaluation of all the code statements and security statements, one of at least two predetermined codes is selected for the coding of the subsidiary zone (T).

2. A method as claimed in Claim 1, characterised in that white blocks and/or column boundaries are used as boundaries of a subsidiary zone.

3. A method as claimed in Claim 1 or 2, characterised in that one point of the delimiting white block is assigned to that subsidiary zone from which it possesses the shortest distance.

4. A method as claimed in Claim 1 or 2, characterised in that a delimiting white block or part thereof is not assigned to any of the subsidiary zones which it delimits, but is coded as an independent subsidiary zone.

5. A method as claimed in Claim 4, characterised in that for coding a first code is used for the text.

6. A method as claimed in Claim 1, characterised in that for each subsidiary zone coding is carried out featuring a first code for the text when the subsidiary zone is bounded on a minimum number of sides, at least on two sides arranged opposite one another, by white blocks and/or column boundaries which are arranged at a distance which does not exceed a predetermined maximum value.

7. A method as claimed in Claim 6, characterised in that the minimum number and/or the maximum value are set either manually or automatically in dependence upon the type of pattern which is to be coded.

8. A method as claimed in one of the Claims 1 to 6, characterised in that the analyses of the first and second types (A1, A2) are carried out either sequentially or simultaneously using similar devices, possibly a multiprocessor system for various zones of the graphic pattern.

9. A method as claimed in one of the preceding Claims, characterised in that for a plurality of subsidiary zones (T) of the graphic pattern, the coding of the subsidiary zones (T) is carried out at any time following the availability of the particular analysis results, either sequentially or simultaneously, using a plurality of similar devices, possibly a multiprocessor system for various zones of the graphic pattern.

10. A method as claimed in one of the preceding Claims, characterised in that the coding of a subsidiary zone (T) is carried out using at least one predetermined code, before the code which is to be used for the subsidiary zone (T) has been determined, that the produced code signals are intermediately stored, and that following the determination of the code which is to be used for the subsidiary zone (T), under certain circumstances the code signal is produced by selection from the stored code signals and not by renewed coding.

11. A method as claimed in one of the preceding Claims, characterised in that specific process steps, the determination of subsidiary zones (T) or the determination of an optimum code for a specific subsidiary zone (T), are replaced by withdrawing from a data store the data which would occur as a result of the process step or by manual setting, if the items of data in question are known.

12. A method as claimed in Claim 11, characterised in that for a specific type of graphic pattern, for example for specific magazines or specific pages of a magazine, the data store is filled with data characteristic of this type of pattern.

13. A method as claimed in one of the preceding Claims, characterised in that the graphic pattern is subdivided into sections, preferably strips, and that the process in accordance with the invention is used sequentially or simultaneously for a plurality of sections.

14. A method as claimed in one of the preceding Claims, characterised in that a subsidiary zone (T) bounded on at least one side by a section boundary which lies within the graphic pattern is coded together with an adjoining pattern section if the analysis of the secound type (A2) carried out for the subsidiary zone (T) does result in an adequate security statement.

15. A method as claimed in one of the preceding Claims, characterised in that prior to the execution of the boundary and/or zone analysis the sample signal is subjected to preliminary filtering which corresponds to sampling with a resolution sufficiently reduced to ensure that the print screen structure is suppressed, possibly only in the horizontal direction.

16. A method as claimed in one of the preceding Claims, characterised in that in order to select sample points of the subsidiary zone (T) from the sample signal the pattern brightness and/or the sum of the gradients of the pattern brightness are determined in transformed and quantised form, that a selection of one-dimensional or two-dimensional intervals which occur as a result of the quantisation are each assigned one analysis result value in respect of each interval, and that the frequency with which an interval occurs within the subsidiary zone (T) is transferred to the analysis result value which is assigned to this interval.

17. A method as claimed in Claim 16, characterised in that the selection of the sample points and/or the intervals is dependent upon the class to which the graphic pattern in question belongs.

18. A method as claimed in one of the preceding Claims, characterised in that for the selection of sample points of the subsidiary zone, which are arranged in rows and columns, brightness values are determined which have been quantised by means of a first quantisation to $NA \geqq 2$ stages and which represent the pattern brightness at the sample points in question in quantised from, that with the assistance of a second quantisation to $NL \geqq 2$ stages sequence lengths are determined in quantised form from the quantised brightness values, that a selection of the two-dimensional intervals which occur as a result of the first and second quantisation steps is assigned one analysis result value in respect of each interval, and that the frequency with which an interval occurs within the subsidiary zone (T) is transferred to the analysis result value assigned to this interval.

19. A method as claimed in Claim 18, characterised in that in place of the frequency of one two-dimensional quantisation interval, the sum of the frequencies of a plurality of two-dimensional quantisation intervals, in particular the sum of the frequencies of all the quantisation intervals which are assigned to the same sample value-quantisation stage, is transferred to an analysis-result value.

20. A method as claimed in Claim 19, characterised in that each selection of two-dimensional spatial frequencies is assigned one analysis result value, that for each of these frequencies the total of the spatial energy spectrum of the subsidiary zone is determined in a possibly transformed form averaged over the vicinity of the frequency, and that the total is transferred to the assigned analysis result value.

21. A device for carrying out the method as claimed in one of the preceding Claims, characterised in that a sampling device (A) is provided for the possibly section-wise sampling of graphic patterns (M), which conducts the obtained sample signal in digital form to a following first buffer store (P1), that the first buffer store (P1) is connected to a first analysis device (A1) which serves to determine the boundaries of subsidiary zones (T) within the graphic pattern (M), that the first analysis device (A1) is connected to a second analysis device (A2) which serves to receive the data which have been determined by the first analysis device (A1) and which represent the boundaries of the subsidiary zones and which also serves to analyse the pattern (M) within a subsidiary zone (T), that the second analysis device (A2) is further connected to the first buffer store (P1) in order to receive the sample values which are to be analysed, that the secound analysis device (A2) is connected to a decision device (E) which makes the decision as to which of at least two predetermined codes is to be used in order to code a subsidiary zone (T), that this decision is forwarded to a coder (CD) which is arranged following the decision device (E) and which receives the sample values to be coded via a connection to the first buffer store (P1), and that the coder (CD) is connected to a second buffer store (P2) which receives the coded sample values from the coder (CD) and from where these coded sample values can be transferred to any other communication partner who is participating or to a further store (for example to that of a data processing system, data bank or the like) (Fig. 7).

22. A device as claimed in Claim 21, characterised in that the coder (CD) is connected via a feedback connection to the sampling device (A) via which the completed coding of one or more than one subsidiary zone (T) and the completed transfer of the corresponding code signals to the second buffer store (P2) is signalled, as a result of which the sampling device (A) is requested to sample a second section of the graphic pattern (M).

23. A device as claimed in Claim 21 or 22, characterised in that the first analysis device (A1) is directly connected to the coder (CD) via an additional connection via which, possibly following the determination of the boundaries of a subsidiary zone (T), the selection of a code to be used for this subsidiary zone (T) can be transmitted if such a statement can be made on the basis of the determination of the boundaries.

24. A device as claimed in one of the Claims 21 to 23, characterised in that the decision device (E) is connected to the first analysis device (A1) via a feedback connection via which a rejection signal can possibly be transmitted to the first analysis device (A1).

25. A device as claimed in one of the preceding Claims, characterised in that for each selected one-dimensional or two-dimensional quantisation interval a counter is provided which is set to zero prior to the analysis of a subsidiary zone (T) and is increased by one whenever a point of the graphic pattern (M) is assigned to the interval in question by the second analysis device (A2).

26. A method as claimed in one of Claims 1 to 20, characterised in that for all but one analysis value the relative component of the analysis value in the sum of all the analysis values is determined, that by the quantisation of the aforesaid components a multidimensional interval is determined, that a store is provided in which each possible interval is allocated one storage zone, that each storage zone contains a code statement and possibly a security statement, and that the code statement and possibly also the security statement is obtained from the storage zone which is allocated to the determined interval.

27. A method as claimed in Claim 26, characterised in that following the determination of an interval, a product of an interval number (C. I) allocated to this interval and a predetermined natural number (B) is determined.

28. A method as claimed in Claim 27, characterised in that the expression $C \times B$ for a specified function $(f(C))$ of the interval number or a characteristic number C is used as a distance address, measured in bits, at the beginning of a store array, used by way of a table, within a data store, and that in the table the number of the code which is the optimum for the subsidiary zone in question is quoted in B consecutive bits.

29. A method as claimed in Claim 28, characterised in that for $B = 1$ the contents of the table governs the decision between a text code in the case of a specified table position content, e. g. zero, or an image code in the case of the other table position content, i. e. one.

30. A method as claimed in Claim 28 or 29, characterised in that the contents of the table is determined by statistical analysis of a given quantity of representative patterns.

31. A method as claimed in Claim 30, characterised in that for one or more than one subsidiary zone (T) of each pattern (M) of a representative quantity the characteristic number (C) is determined and from this a storage zone in the table is determined, and that this storage zone is filled with the number of the code which is the optimum for the subsidiary zone (T) in question, assuming that this optimum code is known.

32. A method as claimed in Claims 30 and 31, characterised in that following an analysis of all the graphic patterns of the representative quantity, for each value of the characteristic number (C) which can occur in the class of graphic patterns (M) to be coded during the analysis of a subsidiary zone (T), a check is made that the table position in question has been filled.

33. A method as claimed in Claim 32, characterised in that for the checking of the table positions in question an auxiliary store is used in which each value of the characteristic number (C) is allocated one bit.

34. A method as claimed in Claim 33, characterised in that all the bit-positions of the auxiliary store array are allocated the binary value 0 before the beginning of an analysis of the graphic patterns (M) of the representative quantity, and that during the analysis of these graphic patterns, whenever a value for the characteristic number (C) has been determined the binary value 1 is allocated to the bit-position whithin the auxiliary store array which corresponds to this value.

35. A method as claimed in Claim 33, characterised in that following the discovery of an unfilled table position the characteristic number (C) which is most similar to the characteristic number (C) allocated to this position is determined, and that the table position in question is filled with the contents of the table position which is allocated to the most similar characteristic number (C').

36. A method as claimed in Claim 35, characterised in that the most similar characteristic number (C') is in each case determined by means of a distance function in that the charateristic number (C) is compared with all the characteristic numbers which have been allocated the binary value 1 in the auxiliary store and that number for which the distance function results in the minimum deviation between the characteristic number (C) and the most similar characteristic number (C') is selected as the most similar characteristic number (C').

37. A method as claimed in Claim 36, characterised in that the sum of the absolute differences between the digits of the two characteristic numbers (C, C') is used as a distance function.

38. A method as claimed in Claim 35, characterised in that for the case where there are found $n > 1$ characteristic numbers $(C_1' \ldots C_n')$ of the same similarity, namely with the same distance function, the characteristic number $(C_1' \ldots C_n')$ which is selected is that which differs the least in terms of the algebraic difference from the allocated characteristic number (C).

39. A method as claimed in Claim 38, characterised in that a part of the store array of B bits which is allocated to each characteristic number (C) contains a second statement concerning the security of the statement which is stored in the other positions of the store array.

40. A method as claimed in Claim 1, characterised in that the selection from a number of alternative codes is made taking into account the evaluation quantities which they are allocated.

41. A method as claimed in the Claims 30, 34 37 and 38, characterised in that the second statement is determined from the number and type of the code statements which have been discovered for the most similar n characteristic numbers $(C_1' .. C_n')$, where the relevant distance to the characteristic number (C) is taken into account.

42. A method as claimed in the Claims 32 and 35, characterised in that when a table position is recognised as being already filled during the drawing up of the table, the characteristic number (C) which has just been determined, together with the number of the optimum code, is noted in an additional table, that following the drawing up of the table the additonal table is checked, and that for all the characteristic numbers (C) which occur several times in the additional table with different code numbers an optimum code is determined by means of a compromise decision.

43. A method as claimed in Claim 42, characterised in that the compromise decision is a majority decision in accordance with which the code which occurs most frequently for the same characteristic number (C) in the table and in the additional table is finally entered in the table.

44. A method as claimed in Claim 42, characterised in that the compromise decision is made in accordance with the principle of minimum damage where the code entered into the table is that which represents the optimum compromise for a transfer, a reproduction, or for other procedures both for image zones and for text zones.

45. A circuit arrangement for carrying out the method as claimed in one or several of the preceding claims, characterised in that a sample value decoder (WD) is provided, having a signal input (E) for the input of sample pulses produced by a sample element, having a signal output (iw) supplying output signals which represent recognised sample values, and having a reset output (CL) for supplying reset signals, that two interval decoders (IW1, IW2) are provided connected in a cascade arrangement, each designed as a threshold value element, and which each posses a first decision output (N1), a second decision output (J) and a decision input (EE), where the decision input (EE) of the first interval decoder (IW1) within the cascade is connected to the signal output (iw), the first decision output (N1) is connected to the decision input (EE) of the second interval decoder (IW2) within the cascade, the first decision output (N1) of the second interval decoder (IW2) is connected to the signal input of an interval counter (Z3), and the second decision output (J) of the first and second interval decoders (IW1 and IW2) are connected to the signal input of an interval counter ($Z_1$ and $Z_2$ respectively), that the counter outputs of the interval counters ($Z_1, Z_2, Z_3$) are connected to corresponding data inputs of a calculating unit (R) which serves to determine the characteristic number (C), that for the transfer of the characteristic number (C) an output of the calculating unit (R) is connected to a data input of a decision device (E) whose signal output is connected to the control input of a code change-over switch (U), that the calculating unit (R) possesses a further output which emits a security signal (Si), and that the reset output (CL) of the sample value decoder (WD) is connected to the reset inputs of the interval counters $(Z_1 \ldots Z_3)$.

## Revendications

1. Procédé de codage de signaux électriques, qui sont obtenus lors de l'exploration d'un modèle graphique dont le contenu est formé par le mélange d'un texte et d'images, le modèle graphique étant subdivisé en zones partielles, caractérisé par le fait que dans une analyse du premier type (analyse de limites) (A1), au moins une zone partielle est déterminée à l'intérieur du modèle graphique, que le signal d'exploration tiré de l'exploration de la zone partielle est soumis à une ou plusieurs analyses du second type (analyse de zones) (A2), que les résultats des analyses de zones sont exploités pour l'obtention d'une indication de code et d'une indication de sécurité et que l'un au moins de deux codes prédéterminés servant au codage de la zone partielle (T) est sélectionné sur la base d'une pondération de toutes les indications de code et de sécurité.

2. Procédé suivant la revendication 1, caractérisé par le fait qu'on utilise comme limites d'une zone partielle, des blocs blancs et/ou des limites de colonnes.

3. Procédé suivant la revendication 1 ou 2, caractérisé par le fait qu'un point du bloc blanc de limitation est associé à la zone partielle, par rapport à laquelle il possède la distance la plus faible.

4. Procédé suivant la revendication 1 ou 2, caractérisé par le fait qu'un bloc blanc de limitation ou une partie de ce bloc blanc n'est associé à aucune des zones partielles le délimitant, mais est codé sous la forme d'une zone partielle indépendante.

5. Procédé suivant la revendication 4, caractérisé par le fait qu'on utilise pour le codage un premier code pour le texte.

6. Procédé suivant la revendication 1, caractérisé par le fait que pour une zone partielle on réalise un codage avec un premier code pour le texte, lorsque la zone partielle est limitée, sur un nombre minimum de côtés, mais au moins sur deux côtés opposés, par des blocs blancs et/ou des limites de colonnes, dont la distance ne dépasse pas une valeur maximale prédéterminée.

7. Procédé suivant la revendication 6, caractérisé par le fait que le nombre minimum et/ou la valeur maximum est réglé manuellement ou automatiquement en fonction du type du modèle devant être codé.

8. Procédé suivant l'une des revendications 1 à 6, caractérisé par le fait que les analyses du premier et du second type (A1, A2) sont réalisées soit de façon séquentielle, soit de façon simultanée moyennant l'utilisation de dispositifs identiques, par exemple d'un système à multi-processeur pour des zones différentes du modèle graphique.

9. Procédé suivant l'une des revendications précédentes caractérisé par le fait que pour plusieurs zones partielles (T) du modèle graphique, le dodage des zones partielles (T) est réalisé en n'importe quel instant, après la mise à disposition des résultats d'analyses respectifs, soit de façon séquentielle, soit de façon simultanée moyennant l'utilisation de plusieurs dispositifs identiques, éventuellement d'un système à multi-processur pour différentes zones du modèle graphique.

10. Procédé suivant l'une des revendications précédentes, caractérisé par le fait que le codage d'une zone partielle (T) est réalisé avec au moins un code prédéterminé, déjà avant la détermination du code devant être utilisé pour la zone partielle (T), que les signaux de code produits sont mémorisés temporairement et que respectivement après la détermination du code devant être utilisé pour la zone partielle (T), le signal de code est produit éventuellement non pas moyennant un nouveau codage, mais par un choix effectué entre les signaux de code déjà mémorisés.

11. Procédé suivant l'une des revendications précédentes, caractérisé par le fait que dans le cas où des éléments déterminés de procédé, qu'il s'agisse de la détermination de zones partielles (T) ou de la détermination d'un code optimal pour une zone partielle déterminée (T) font défaut, ils sont remplacés par le prélèvement des données, qui seraient obtenues en tant que résultat de l'élément de procédé, hors d'une mémoire de données, ou bien par réglage manuel, dans le cas où les élements considérés sont connus.

12. Procédé suivant la revendication 11, caractérisé par le fait que dans le cas où la mémoire de données est remplie, pour un type déterminé de modèle graphiques, par exemple pour des revues déterminées ou pour des pages déterminées d'une revue, ces données sont caractéristiques de ce type de modèle.

13. Procédé suivant l'une des revendications précédentes, caractérisé par le fait que le modèle graphique est subdivesé en éléments, de préférence des bandes, et que l'utilisation du procédé conforme à l'invention est réalisée séquentiellement ou simultanément pour plusieurs éléments du modèle.

14. Procédé suivant l'une des revendications précédentes, caractérisé par le fait qu'une zone partielle (T), qui est limitée au moins d'un côté par une limite d'élément du modèle, qui est située à l'intérieur du modèle graphique, est codée en association avec un élément voisin du modèle dans la mesure où l'analyse du second type (A2), effectuée pour la zone partielle (R), ne fournit pas une indication suffisante de sécurité.

15. Procédé suivant l'une des revendications précédentes, caractérisé par le fait que le signal d'exploration est soumis, avant la mise en oeuvre d'une analyse de limite et/ou de zones, à un préfiltrage qui correspond à une exploration avec une précision suffisamment réduite pour que la structure du réseau d'impression soit supprimée, éventuellement uniquement suivant la direction horizontale.

16. Procédé suivant l'une des revendications précédentes, caractérisé par le fait que pour une sélection de points d'exploration de la zone partielle (T) à partir du signal d'exploration, la luminosité du modèle et/ou la valeur du gradient de la luminosité du modèle est déterminée sous une forme transformée et quantifiée, qu'une sélection des intervalles unidimensionnels ou bidimensionnels qui apparaissent sous l'effet de la quantification, est associée respectivement à une valeur de résultat de l'analyse pour chaque intervalle et que la fréquence, avec laquelle un intervalle apparaît à l'intérieur de la zone partielle (T) est affecté à la valeur du résultat d'analyse qui est associée à cet intervalle.

17. Procédé suivant la revendication 16, caractérisé par le fait que la sélection des points d'exploration et/ou des intervalles rendus dépendants de la classe dont fait partie le modèle graphique considéré.

18. Procédé suivant l'une des revendications précédentes, caractérisé par le fait que pour une sélection de points d'exploration, disposés suivant des lignes et des colonnes, de la zone partielle au moyen d'une première quantification à $NA \geq 2$ échelons, on détermine des valeurs quantifiées de luminosité qui représentent sous forme quantifiée la luminosité du modèle au niveau des points respectifs d'exploration, que des longueurs de parcours sont déterminées sous forme quantifiée à partir des valeurs de luminosité quantifiées, à l'aide d'une seconde quantification à $NL \geq 2$ échelons, qu'une valeur de résultat d'analyse est associée pour chaque intervalle à une sélection des intervalles bidimensionnels, qui sont obtenus par suite de la première et de la seconde quantification, et que la fréquence, avec laquelle un intervalle apparaît à l'intérieur de la zone partielle (T), est affectée à la valeur de résultat d'analyse qui est associée à cet intervalle.

19. Procédé suivant la revendication18, caractérisé par le fait qu'à la place de la fréquence d'un intervalle bidimensionnel de quantification, la somme des fréquences de plusieurs intervalles bidimensionnels de quantification est affectée à une valeur de résultat d'analyse, notamment la somme des fréquences de tous les intervalles de quantification qui sont associés au même échelon de quantification des valeurs d'exploration.

20. Procédé suivant la revendication 19, caractérisé par le fait qu'une valeur de résultat d'analyse est associée respectivement à un choix de fréquences spatiales bidimensionnelles et que pour chacune de ces fréquences, la valeur du spectre d'énergie spatial de la zone partielle est déterminée sous une forme éventuellement transformée et dont la moyenne a été formée sur l'environnement de la fréquence, et que la valeur est affectée à la valeur de résultat d'analyse associée.

21. Dispositif pour la mise en oeuvre du procédé suivant l'une des revendications précédentes, caractérisé par le fait qu'il est prévu un dispositif d'exploration (A) servant à explorer éventuellement par zones, des modèles graphiques (M) et qui envoie sous forme numérique le signal d'exploration obtenu à une première mémoire tampon (P1) branchée en aval, qu'à la première mémoire tampon (P1) est relié un premier dispositif d'analyse (A) servant à déterminer les limites de zones partielles (T) à l'intérieur du modèle graphique (M), qu'au premier dispositif d'analyse (A1) est raccordé un second dispositif d'analyse (A2) servant à transférer les données déterminées par le premier dispositif d'analyse (A) et représentant les limites des zones partielles (T), et qui sert à réaliser l'analyse du modèle (M) à l'intérieur d'une zone partielle (A), que le second dispositif d'analyse (A2) est en outre relié à la première mémoire tampon (P1) pour le transfert des valeurs d'exploration devant être respectivement analysées, qu'au second dispositif d'analyse (A2) est raccordé un dispositif de prise de décision (E) qui prend la décision concernant celui d'au moins deux codes prédéterminés qui doit être utilisé pour le codage d'une zone partielle respective (M), que cette décision est transmise à un codeur (CD) branché en aval du dispositif de prise de décision (E), et qui prend en charge les valeurs d'exploration devant être codées, par l'intermédiaire d'une liaison avec la première mémoire tampon (P1), et qu'au codeur (CD) est raccordé une seconde mémoire tampon (P2) qui prend en charge les valeurs d'exploration codées provenant du codeur (CD) et à partir de laquelle ces valeurs d'exploration codées peuvent être retransmises à un partenaire de communication éventuellement participant ou à une autre mémoire (par exemple à la mémoire d'une installation de traitement des données, ou analogue) (figure 7).

22. Dispositif suivant la revendication 1, caractérisé par le fait que le codeur (CD) est relié au dispositif d'exploration (A) par l'intermédiaire d'une liaison en retour au moyen de laquelle le codage réalisé d'une ou de plusieurs zones partielles (A) et la transmission réalisée des signaux de code correspondants sont signalées à la seconde mémoire tampon (P2), le dispositif d'exploration (A) étant invité à explorer une seconde zone du modèle graphique (M).

23. Dispositif suivant la revendication 21 ou 22, caractérisé par le fait que le premier dispositif d'analyse (A1) est relié directement au codeur (CD) par l'intermédiaire d'une liaison supplémentaire au moyen de laquelle, éventuellement après détermination des limites d'une zone partielle (A), le choix d'un code devant être utilisé pour cette zone partielle (T) peut être retransmis, dans la mesure où une telle indication peut déjà être établie à partir de la détermination des limites.

24. Dispositif suivant l'une des revendications 21 à 23, caractérisé par le fait que le dispositif de prise de décision (E) est relié au premier dispositif d'analyse (A) par l'intermédiaire d'une liaison de signalisation en retour par l'intermédiaire de laquelle éventuellement un signal de rejet est éventuellement transmis au premier dispositif d'analyse (A1).

25. Dispositif suivant l'une des revendications précédentes, caractérisé par le fait que pour chaque intervalle de quantification undimensionnel ou bidimensionnel choisi, il est prévu un compteur respectif qui est ramené à zéro avant l'analyse d'une zone partielle (A) et est accru respectivement de 1 lorsqu'un point du modèle graphique (M) est associé à l'intervalle respectif par le second dispositif d'analyse (A2).

26. Procédé suivant l'une des revendication 1 à 20, caractérisé par le fait que pour toutes les valeurs d'analyse sauf une, la fréquence relative de la valeur d'analyse parm la somme de toutes les valeurs d'analyses est déterminée, qu'un intervalle multidimensionnel est déterminé par quantification desdites fréquences et qu'il est prévu une mémoire dans laquelle une plage de mémoire est associée à chaque intervalle possible, que chaque zone de mémoire contient une indication de code et éventuellement une indication de sécurité, que l'indication de code et éventuellement également l'indication de sécurité est prélevée de la zone de mémoire, qui est associée à l'intervalle prédéterminé.

27. Procédé suivant la revendication 27, caractérisé par le fait qu'après la détermination d'un intervalle, on détermine un produit d'un numéro d'intervalle (C.I) associé à cet intervalle par un nombre entier naturel prédéterminé (B).

28. Procédé suivant la revendication 27, caractérisé par le fait que l'expression $C \times B$ pour une fonction prédéterminée (f(C)) du numéro d'intervalle ou un nombre caractéristique C est utilisée en tant qu'adresse de distance, mesurée en bits, jusqu'au début d'une zone de mémoire utilisée en tant que tableau à l'intérieur d'une mémoire de données, et que dans le tableau le numéro do code optimal pour la zone partielle considérée est indiqué suivant respectivement B bits successifs.

29. Procédé suivant la revendication 28, caractérisé par le fait que pour B = 1, la décision entre un code de texte pour un contenu déterminé d'une case du tableau, par exemple zéro, et un code d'images contenant l'autre contenu de la case du tableau, à savoir un, est prise au moyen du contenu du tableau.

30. Procédé suivant la revendication 28 ou 29, caractérisé par le fait que le contenu du tableau est déterminé par évaluation statistique d'une quantité déterminée de modèle représentatif.

31. Procédé suivant la revendication 30, caractérisé par le fait que le nombre caractéristique (C) est déterminé pour une ou plusieurs zones partielles (T) de chaque modèle (M) d'une quantité représentative et qu'à partir de là une zone de mémoire du tableau est déterminée et que cette zone de mémoire est remplie avec le numéro du code optimal pour la zone partielle respective (R), moyennant l'hypothèse que ce code optimal est connu.

32. Procédé suivant les revendications 30 et 31, caractérisé par le fait qu'après une évaluation de tous les modèles graphiques de la quantité représentative et pour chaque valeur du nombre caractéristique (C), qui peut apparaître dans la classe, devant être codée, de modèles graphiques (M) lors de l'évaluation d'une zone partielle (T), on contrôle si la case considérée du tableau a été remplie.

33. Procédé suivant la revendication 32, caractérisé par le fait que pour le contôle des cases considérées du tableau, on utilise une mémoire auxiliaire dans laquelle un bit est associé à chaque valeur du nombre caractéristique (C).

34. Procédé suivant la revendication 33, caractérisé par le fait qu'á toutes les cases des bits de la plage de mémoire auxiliaire, la valeur binaire »0« est associée avant le début d'une évaluation du modèle graphique (M) de la quantité représentative et que pendant l'évaluation de ce modèle graphique, la valeur binaire (1) est affectée, lorsqu'une valeur a été déterminé pour le nombre caractéristique (C), à la case binaire, correspondant à ce nombre, de la plage de mémoire auxiliaire.

35. Procédé suivant la revendication 33, caractérisé par le fait qu'après la découverte d'une case non remplie du tableau, le nombre caractéristique (C') le plus proche du nombre caractéristique (C) associé à cette case est prédéterminée et que la case concernée du tableau est remplie avec le contenu de la case du tableau, qui est associé au nombre caractéristique (C') le plus proche.

36. Procédé suivant la revendication 35, caractérisé par le fait que le nombre caractéristique (C') respectivement le plus proche est déterminé au moyen d'une fonction de distance par le fait qu'au nombre caractéristique (C) sont comparés tous les nombres caractéristiques auxquels la valeur binaire (1) a été associée à la valeur auxiliaire et que l'on choisit comme nombre caractéristique (C') le plus proche, le nombre pour lequel la fonction de distance founit l'écart minimum entre le nombre caractéristique (C) et le nombre caractéristique (C') le plus proche.

37. Procédé suivant la revendication 36, caractérisé par le fait qu'on utilise comme fonction de distance la somme des différences absolues des positions et le nombre caractéristique (C, C').

38. Procédé suivant la revendication 35, caractérisé par le fait que dans le cas où $N > 1$ nombres caractéristiques $(C'_1 \ldots C'_n)$ possédant la même proximité, c'est-à-dire la même fonction de distance, sont trouvés, on choisit le nombre caractéristique faisant partie des nombres $(C'_1 \ldots C'_n)$ et qui diffère le moins, du point de vue de la différence algébrique, du nombre caractéristique (C) associé.

39. Procédé suivant la revendication 38, caractérosé par le fait qu'une partie de la zone de mémoire de B bits, qui est associée à chaque nombre caractéristique (C), contient une second indication concernant la sécurité de l'indication fixée dans les autres emplacements de la zone de mémoire.

40. Procédé suivant la revendication 1, caractérisé par le fait que le choix entre un certain nombre de codes différents est effectué en tenant compte de la valeur de pondération qui leur est respectivement associée.

41. Procédé suivant les revendications 30, 34, 37 et 38, caractérisé par le fait que la seconde indication est déterminée à partir du nombre et du type des indications de code trouvées pour les n nombres caractéristiques les plus proches $(C'_1 \ldots C'_n)$, et ce en prenant en compte la distance respective par rapport au nombre caractéristique (C).

42. Procédé suivant les revendications 32 et 35, caractérisé par le fait que lorsqu'une case du tableau est identifiée comme étant déjà remplie lors de l'établissement du tableau, le nombre caractéristique (C) précisément déterminé et marqué avec le numéro du code optimal dans un tableau supplémentaire, que le tableau supplémentaire est contrôlé après l'établissément du tableau et que pour tous les nombres caractéristiques (C), qui apparaissent plusieurs fois dans le tableau supplémentaire avec des numéros de code différents, un code optimal est déterminé par une décision de compromis.

43. Procédé suivant la revendication 42, caractérisé par le fait que la décision de compromis est une décision majoritaire conformément à laquelle le code, qui apparaît le plus fréquemment pour le même nombre caractéristique (C) dans le tableau et dans le tableau supplémentaire, est reporté en définitive dans le tableau.

44. Procédé suivant la revendication 42, caractérisé par le fait que la décision de compromis est prise en procédant selon le principe du risque minimum, le code, qui représenté le compromis optimal pour une transmission, une reproduction ou pour d'autres processus aussi bien pour des zones d'image que pour des zones de texte, étant porté dans le tableau.

45. Montage pour la mise en oeuvre du procédé suivant une ou plusieurs des revendications précédentes, caractérisé par le fait qu'il est prévu un décoduer (WD) de valeurs d'exploration comportant une entrée (E) des signaux et servant à l'introduction d'impulsions d'exploration produites par un organe d'exploration, une sortie (iw) des signaux servant à délivrer des signaux de sortie représentant des valeurs d'exploration identifiées, et une sortie (CL) de remise à l'état initial servant à délivrer des signaux de remise à l'état initial, et qu'il est prévu deux décodeurs d'intervalles (IW1, IW2) branchés en cascade, réalisés respectivement sous la forme d'organes à valeurs de seuil et équipés respectivement d'une première sortie de décision (N1), d'une seconde sortie de décision (J) et d'une entrée de décision (EE), l'entrée de décision (EE) du premier décodeur d'intervalles (IW1) du montage en cascade étant reliée à la sortie des signaux (iw), tandis que la première sortie de décision (N1) de ce décodeur est reliée à l'entrée de décision (EE) du second décodeur d'intervalles (IW2) du montage en cascade, que la première sortie de décision (N1) du second décodeur d'intervalle (IW2) est reliée à l'entrée des signaux d'un compteur d'intervalle (Z3) et que respectivement la seconde sortie de décision (J) du premier et du second décodeur d'intervalles (IW1 et IW2) est reliée à une entrée des signaux d'un compteur d'intervalles (Z1 ou Z2), que les sorties de comptage des compteuers d'intervalles (Z1, Z2, Z3) sont reliées à des entrées correspondantes de données d'une unité de calcul (R) servant à la détermination du nombre caractéristique (C), qu'une sortie de l'unité de calcul (R) est raccordée, pour la retransmission du nombre caractéristique (C) à une entrée de données d'un dispositif de prise de décision (E), dont la sortie des signaux est raccordée à l'entrée de commande d'un commutateur de code (U), que l'unité de calcul (R) possède une autre sortie délivrant un signal de sécurité (Si) et que la sortie (CL) de remise à l'état initial du décodeur de caleurs d'exploration (WD) est reliée aux entrées de remise à l'état initial des compteurs d'intervalles (Z1 . . . Z3).

# FIG 1

# FIG 2

$x \longrightarrow$

0

$y$

# FIG 3

$x \longrightarrow$

0

$y$

# FIG 4

$h'(x_i, y_i) \longrightarrow$

$b'(x_i, y_i)$

| 1 | 2 | 3 |
|---|---|---|
| 4 | 5 | 6 |

# FIG 5

$S_1(t)$

| L11 | L21 | L31 | L22 | L12 | L23 | L32 | L24 | L13 | L25 |
| =2 | =1 | =3 | =1 | =3 | =1 | =4 | =1 | =2 | =2 |

$S_2(t)$

| L26 | L33 | L27 | L14 | L28 | L15 | L29 | L34 |
| =3 | =5 | =1 | =2 | =3 | =2 | =1 | =3 |

# FIG 6

$S_i(t) \longrightarrow$

$L_{ik} \longrightarrow$

| 1 (0) | 2 (6) | 3 (0) |
|-------|-------|-------|
| 4 (5) | 5 (3) | 6 (2) |
| 7 (0) | 8 (0) | 9 (2) |

# FIG 7

FIG 8

FIG 9

FIG 10

FIG 11

## FIG 12

| 1 | 2 | 3 | 4 | 5 |
|---|---|---|---|---|
| 6 | 7 | 8 | 9 | 10 |
| 11 | 12 | 13 | 14 | 15 |

p(3) →

p(1) ↓

## FIG 13